# EUROPEAN PATENT APPLICATION

(11) **EP 4 741 773 A1**
(43) Date of publication of application: **13.05.2026**
(21) Application number: 24275120.4
(22) Date of filing: 06.11.2024
(51) Int. Cl.: G01D 5/20

(54) **AN INDUCTIVE ENCODER**

(71) Applicant: Renishaw plc, Wotton-under-Edge, Gloucestershire GL12 8JR (GB)
(72) Inventor: The designation of the inventor has not yet been filed
(74) Representative: Rolfe, Edward William

(57) **Abstract**

An inductive encoder comprising first and second members relatively moveable along a measurement direction, configured such that: the first member has, arranged at or toward a front side thereof which faces the second member, at least a first scale track; and such that the second member has, arranged at or toward a front side thereof which faces the first member: an excitation coil through which an alternating current is passed at a predetermined operating frequency so as to generate an alternating magnetic field which is manipulated by the first scale track; and at least a first receiver coil for sensing the alternating magnetic field as manipulated by the first scale track, via which the relative position of the first and second members along the measurement direction can be measured. The inductive encoder is further configured such that: i) the first member comprises magnetically permeable material having a relative magnetic permeability *µᵣ* of at least 2 at said operating frequency so as to increase, at least at the first scale track, the magnetic flux density of the magnetic field generated by the excitation coil; and/or ii) the second member comprises magnetically permeable material having a relative magnetic permeability *µᵣ* of at least 2 at said operating frequency so as to increase, at least at the first scale track, the magnetic flux density of the magnetic field generated by the excitation coil.

## Description

The present invention relates to an inductive encoder, in particular an inductive rotary encoder.

Inductive encoders are known and typically comprise: i) a first member (e.g. what is commonly referred to as a "rotor", in the case of a rotary encoder) for mounting to a first part of a machine (e.g. such as a shaft that is rotatable relative to a static part of the machine about an axis); and ii) a second member (e.g. what is commonly referred to as a "stator", in the case of a rotary encoder) for mounting to a second (e.g. static) part of a machine. Typically, one of the members (e.g. the second member/"stator") is an active/powered component and comprises transmit (or "excitation") and receiver coils (and associated electronics) for creating and sensing an alternating magnetic/electromagnetic field. The terms "magnetic field" and "electromagnetic field" are used interchangeably herein because the magnetic fields referred to herein are created by an electric current and therefore can also be referred to as an electromagnetic field. Also, as will be understood, references herein to a magnetic field created by an excitation or transmit coil are references to an "alternating" magnetic field created thereby, and is often referred to herein simply as a "magnetic field" for brevity. Typically, the other member (e.g. the first member/"rotor") is a passive/unpowered component comprising scale features which manipulate the electromagnetic field sensed by the second member's (e.g. the stator's) sensor coils such that the output(s) of the second member's (e.g. the stator's) receiver coil(s) are dependent on the relative position (e.g. relative rotational orientation about an axis, in the case of a rotary encoder) of the first and second members about the axis. Accordingly, the relative (e.g. rotational) position (and/or derivatives thereof) of the second member/stator and first member/rotor (and hence of the different parts of the machine) can be measured from the output(s) of the second member's/stator's receiver coil(s).

The present invention relates to improvements in connection with inductive encoders. In particular the present document describes an inductive rotary encoder apparatus having first and second members relatively moveable along a measurement direction. The first member can have arranged at or toward a front side thereof which faces the second member, at least a first scale track. The second member can have arranged at or toward a front side thereof which faces the first member: an excitation coil through which an alternating current is passed at a predetermined operating frequency so as to generate an alternating magnetic field which is manipulated by the first scale track; and at least a first receiver coil for sensing the alternating magnetic field as manipulated by the first scale track, via which the relative position of the first and second members can be measured.

According to a first aspect of the invention there is provided an inductive encoder comprising first and second members relatively moveable along a measurement direction, configured such that: the first member has arranged at or toward a front side thereof which faces the second member, at least a first scale track; the second member has arranged at or toward a front side thereof which faces the first member: an excitation coil through which an alternating current is passed at a predetermined operating frequency so as to generate an alternating magnetic field which is manipulated by the first scale track; and at least a first receiver coil for sensing the alternating magnetic field as manipulated by the first scale track, via which the relative position of the first and second members can be measured, characterised in that: i) the first member comprises magnetically permeable material having a relative magnetic permeability *µᵣ* of at least 2 at said operating frequency so as to increase, at least at the first scale track, the magnetic flux density of the magnetic field generated by the excitation coil; and/or ii) the second member comprises magnetically permeable material having a relative magnetic permeability *µᵣ* of at least 2 at said operating frequency so as to increase, at least at the first scale track, the magnetic flux density of the magnetic field generated by the excitation coil.

As mentioned above, the first member has a "front" side which is configured to face the second member, and at or toward which, the at least first scale track is arranged. Accordingly, references herein to relative directional terms with respect to the first member, e.g. terms such as "front", "back", "rear", "in front of" and "behind", are made in connection therewith. In preferred embodiments, the magnetically permeable material of the first member is arranged behind the scale track. Preferably, the magnetically permeable material of the first member is arranged directly behind the scale track.

As mentioned above, the second member has a "front" side which is configured to face the first member, and at or toward which the excitation and receiver coils are arranged. Accordingly, references herein to relative directional terms with respect to the second member, e.g. terms such as "front", "back", "rear", "in front of" and "behind", are made in connection therewith. Preferably, the magnetically permeable material of the second member is arranged behind the excitation and at least first receiver coils. Preferably, the magnetically permeable material of the first member is arranged directly behind the excitation and/or receiver coils.

The first member can comprise a layered construction. In such a case the magnetically permeable material of the first member could be sandwiched between a first layer thereof which comprises the first scale track, and a second layer thereof. The first layer could comprise a predominantly non-electrically conductive material (e.g. on which conductive scale features are provided). For example, the predominantly non-electrically conductive material could have a resistivity of greater than 1×10⁻⁴ ohm-metre, and preferably has a significantly higher resistivity than that, for example, is even greater than 1 ohm-metre, for example greater than 1×10³ ohm-metre. The predominantly non-electrically conductive material could comprise a composite structure, e.g. a fibreglass epoxy resin structure, e.g. such as what is commonly referred to as FR4. Of course, the predominantly non-electrically conductive material could comprise other material(s), such as ceramic. The second layer of the first member could be a mounting member. The mounting member can comprise features via which the first member can be mounted to a machine part, for example one or more mounting flexures, and/or one or more bolt holes. The second layer of the first member could comprise a metallic layer. The second layer of the first member could comprise a predominantly electrically conductive material (e.g. the resistivity of which is less than 1×10⁻⁶ ohm-metre).

The second member can comprise a layered construction. In such a case the magnetically permeable material of the second member could be sandwiched between a first layer thereof which comprises the excitation and receiver coils, and a second layer thereof. The first layer could comprise a predominantly non-electrically conductive material (e.g. on which conductive scale features are provided). For example, the predominantly non-electrically conductive material could have a resistivity of greater than 1×10⁻⁴ ohms-metre, and preferably has a significantly higher resistivity than that, for example, is even greater than 1 ohm-metre, for example greater than 1×10³ ohm-metre. The predominantly non-electrically conductive material could comprise a composite structure, e.g. a fibreglass epoxy resin structure, e.g. such as what is commonly referred to as FR4. Of course, the predominantly non-electrically conductive material could comprise other material(s), such as ceramic. The second layer could also comprise a predominantly non-electrically conductive material (e.g. on which the conductive excitation and receiver coils are provided). For example, the predominantly non-electrically conductive material could have a resistivity of greater than 1×10⁻⁴ ohm-metre, and preferably has a significantly higher resistivity than that, for example, is even greater than 1 ohm-metre, for example greater than 1×10³ ohm-metre. The predominantly non-electrically conductive material could comprise a composite structure, e.g. a fibreglass epoxy resin structure, e.g. such as what is commonly referred to as FR4. Of course, the predominantly non-electrically conductive material could comprise other material(s), such as ceramic. The second layer of the second member could comprise one or more electronic components mounted thereon. For example, such one or more electronic components can comprise components for driving the excitation coil with the alternating current and/or for processing signals received by the at least first receiver coil. Of course, the first and second layers of the second member can be electrically connected to each other.

The magnetically permeable material of the first member and/or of the second member could comprise a substrate having magnetic particles dispersed therethrough. The substrate could comprise a solid (e.g. a sheet) or a fluid (e.g. an adhesive paste).

The thickness of the magnetically permeable material of the first member and/or of the second member can be less than 1mm, optionally less than 0.7mm, for example less than 0.5mm.

In preferred embodiments, the magnetically permeable material of the first member and/or of the second member has a relative magnetic permeability *µᵣ* at the operating frequency of at least 10, optionally of at least 20, for example of at least 30.

In preferred embodiments, the position and width of the magnetically permeable material of the first member, is such that it sits (directly) behind and extends over at least 75% of the entire width of the at least first scale track, more preferably such that it sits (directly) behind and extends over at least 90% of the entire width of the at least first scale track, and optionally sits (directly) behind and extends over at least the entire width of all scale tracks provided on the first member. In preferred embodiments, the magnetically permeable material of the first member extends along at least 75% of the length of the at least first scale track as measured along the measurement direction, more preferably extends along at least 90% of the length of the at least first scale track as measured along the measurement direction. In preferred embodiments, the position, width (perpendicular to the measurement direction) and length (along the measurement direction) of the magnetically permeable material of the first member, is such that it sits (directly) behind and subsists within/covers at least 75% of the footprint defined by the at least first scale track (i.e. the area between its innermost (*ID*) and outermost (*OD*) diameters), more preferably such that it sits (directly behind) and subsists within/covers at least 90% of the footprint defined by the at least first scale track, i.e. the area between the innermost (*ID*) and outermost (*OD*) diameters defined by the scale track(s).

In preferred embodiments, the position and width of the magnetically permeable material of the second member, is such that it sits (directly) behind and extends over at least 75% of the entire width of the excitation and receiver coils, more preferably such that it sits (directly) behind and extends over at least 90% of the entire width of the excitation and receiver coils, and optionally sits (directly) behind and extends over at least the entire width of the excitation and receiver coils on the second member. In preferred embodiments, the magnetically permeable material of the second member extends along at least 75% of the length of the excitation and receiver coils as measured along the measurement direction, more preferably along at least 90% of the length of the excitation and receiver coils as measured along the measurement direction. In preferred embodiments, the position, width (perpendicular to the measurement direction) and length (along the measurement direction) of the magnetically permeable material of the second member, is such that it sits (directly behind) and subsists within/covers at least 75% of the footprint defined by the excitation and receiver coils (i.e. the area between the innermost (*ID*) and outermost (*OD*) diameters innermost and outermost diameters defined by the excitation and receiver coils), more preferably such that it sits (directly behind) and subsists within/covers at least 90% of the footprint defined by the excitation and receiver coils.

Optionally, the magnetically permeable material of the first member and/or of the second member increases, at least at the first scale track, the magnetic flux density of the magnetic field generated by the excitation coil, by at least 5%, optionally by at least 10%, for example by at least 20%, for instance at least 30%. As will be understood, this can be as compared to an inductive encoder that is identical in all other respects, apart from (i.e. except that it does not have) the magnetically permeable material.

The inductive encoder can be a rotary inductive encoder. Accordingly, the first and second members can be relatively rotatable about an axis of rotation. The measurement direction can be a rotational measurement direction. The at least first scale track can extend (e.g. annularly) around a scale track axis. The excitation and receiver coils can extend (e.g. annularly) around a coil axis at different radii to each other. The magnetically permeable material of the first member can extend around the scale track axis along the measurement direction. The magnetically permeable material of the second member can extend around the coil axis along the measurement direction. As will be understood, in embodiments in which the scale track, the excitation coil and/or the receiver coil extends annularly (around its respective axis), this includes both fully annularly, and substantially fully annularly (e.g. around at least 75% of the full annular extent, more preferably around at least 90% of the full annular extent).

The number of excitation coils can be fewer than the number of scale tracks and/or the number of receiver coils. For instance, the second member could have only one excitation coil and at least two receiver coils (and for example the first member can comprise at least two scale tracks). For instance, in a preferred embodiment, one excitation coil is used to generate a magnetic field that is manipulated by each of first, second and third scale tracks (wherein a first receiver coil is arranged to sense the magnetic field as manipulated by the first scale track, a second receiver coil is arranged to sense the magnetic field as manipulated by a second scale track, and a third receiver coil is arranged to sense the magnetic field as manipulated by the third scale track).

The excitation coil can be a single direction excitation coil such that in use current flowing through the excitation coil around the coil axis does so in one direction only (e.g. clockwise or anti-clockwise) at any given instant in time. The excitation coil can extend circularly around the coil axis at a constant, and singular, radius. The excitation coil can be a single-turn coil. The at least first receiver coil can be a single-turn coil. The excitation coil could comprise a capacitor arranged such that excitation coil operates as a resonant circuit. The capacitor could be placed such that it is located in-line with the excitation coil's annular/circular extent (i.e. at the same radius as the radius of a conductor wire of the excitation coil).

The first member can have at least a second (and for example also a third) scale track extending along the measurement direction (e.g. around the scale track axis at different radii to each other and to the first scale track). Accordingly, the second member can comprise a second receiver coil for sensing the alternating magnetic field as manipulated by the second scale track (and for example a third second receiver coil for sensing the alternating magnetic field as manipulated by the third scale track), via which the position of the first and second members along the measurement direction. The periods of the first and second (and for example third) scale tracks can be different to each other. For example, the first, second and third scale tracks can be configured such that the only common integer factor of the period count (in other words, "feature count", or "line count") of said first, second and third scale tracks is 1. The first and second receiver coils can be located on the same side of the excitation coil as each other (e.g. such that the first receiver coil is separated from the excitation coil by the second receiver coil).

In the case of a rotary encoder, the second and third receiver coils can have different radii to each other and to the excitation coil and the first receiver coil. The first and second receiver coils can be located on the same radial side of the excitation coil as each other. The first receiver coil can be radially separated from the excitation coil by the second receiver coil. The third receiver coil can be provided on the opposite radial side of the excitation coil to the first and second receiver coils. Accordingly, for example, the first and second receiver coils can be located on the radial inside of the excitation coil and the third receiver coil can be located on the radial outside of the excitation coil. Accordingly, for example, the excitation coil can sit radially between the second and third receiver coils. Accordingly, for example, the radius of the first receiver coil can be smaller than that of the second receiver coil, which can be smaller than that of the excitation coil, which can be smaller than that of the third receiver coil.

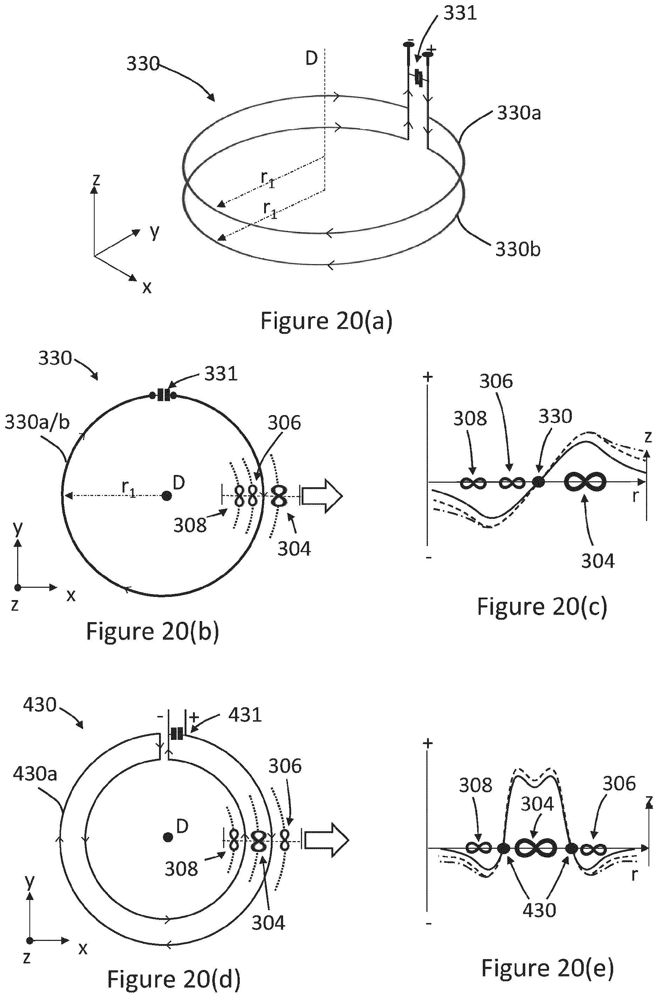

The present invention has been found to be particularly useful in embodiments in which the excitation coil is a single direction excitation coil, and/or when the inductive encoder comprises multiple scale tracks and receiver coils, and/or when there are fewer excitation coils than receiver coils, and/or when receiver coils are separated from the excitation coil that creates the magnetic field it senses by another receiver coil (and, for example, is particularly beneficial for inductive rotary encoders configured as described in more detail below in connection with Figure 20(a) and (b)) because in those situations it can be particularly beneficial to boost the magnetic flux density (e.g. compared to situations inductive rotary encoders configured as described in more detail below in connection with Figure 20(d)). Accordingly, the invention has been found to be particularly beneficial for those embodiments in which the first member has second and third scale tracks extending annularly around the scale track axis at different radii to each other and to the first scale track; the second member comprising a second receiver coil for sensing the alternating magnetic field as manipulated by the second scale track, and a third second receiver coil for sensing the alternating magnetic field as manipulated by the third scale track, via which the relative rotational position of the first and second members about the axis of rotation can be measured, the second and third receiver coils have different radii to each other and to the excitation coil and the first receiver coil; wherein the first and second receiver coils are located on the same radial side of the excitation coil as each other, wherein the first receiver coil is radially separated from the excitation coil by the second receiver coil; and wherein the third receiver coil is provided on the opposite radial side of the excitation coil to the first and second receiver coils.

As will be understood, another commonly used term in the field of inductive encoders for "excitation coil" is "transmit coil". Accordingly, the term "transmit coil" could be used in place of the term "excitation coil" herein.

As will be understood, the inductive encoder can be configured to provide/output information (e.g. a signal) indicative of the relative position of the first and second along the measurement direction (based on the output of the receiver coil(s)). Accordingly, the inductive encoder, can comprise means for determining from the receiver coil(s) information concerning the (e.g. absolute) (e.g. rotational) position, and/or a derivative thereof, of the first and second members (e.g. about the axis of rotation). Such means can comprise one or more "processing" or "processor" devices. This could be referred to as a position calculator. As will be understood, a "processing" or "processor" device or "position calculator" can comprise a bespoke processing device configured for the specific application (e.g. a field programmable gate array "FPGA") as well as a more generic processing device which can be programmed (e.g. via software) in accordance with the needs of the application in which it is used. Accordingly, a suitable "processing" or "processor" device or "position calculator" can comprise, for example, a CPU (Central Processor Unit), FPGA (Field Programmable Gate Array), or ASIC (Application Specific Integrated Circuit), or the like. Such means could be provided as part of one of the first or second members (in which case, preferably the second member, and more preferably the second layer of the second member). But this doesn't necessarily have to be the case and the inductive encoder could comprise a separate component which comprises said means (e.g. one or more "processing" or "processor" devices) for determining from the receiver coil(s), information concerning the rotational position, and/or a derivative thereof, of the first and second members about the axis of rotation. For instance, the inductive encoder could comprise said first and second members and a separate interface unit and/or controller comprising said means. Said controller could be the controller of a machine on which the inductive encoder is, or is to be, mounted.

A receiver coil could comprise a differential coil (e.g. which can lead to the modulation depth of the amplitude-modulated signal output thereby being greater than 100%).

A receiver coil can comprise a differential coil. A receiver coil can comprise a pair of phase-shifted coils, such that a receiver coil provides at least a pair of phase-shifted signals (e.g. SIN and COS signals). A receiver coil can comprise a pair of phase-shifted differential coils. For example, a receiver coil can comprise a SIN coil (providing a SIN signal) and a COS coil (providing a COS signal), each of which comprises a differential coil.

As will be understood, a scale track can be configured to manipulate the magnetic field dependent on the relative position of the first and second members along the measurement direction (e.g. about the about an axis of rotation). A scale track can be configured such that its manipulating effect on the magnetic field varies in a spatially-cyclical manner. The spatial frequency of such spatially cyclical effect can be dependent on the period of the scale features.

As will be understood, a scale track/features can be configured to manipulate the amplitude of the (alternating) magnetic field (generated by the excitation coil). Accordingly, a scale track can be configured to manipulate/modulate the amplitude of the (alternating) magnetic field dependent on the relative position of the first and second members along the measurement direction (e.g. about the about an axis of rotation). A scale track can be configured to manipulate the amplitude of the (alternating) magnetic field in a cyclical manner the spatial frequency of which is dependent on the period of its scale features.

Typically, in use, in the case of an inductive rotary encoder, the first member will be mounted on a rotating part of a machine and the second member will be mounted on a static part of machine (accordingly the first member could be referred to as a "rotor" and the second member could be referred to as a "stator"). Nevertheless, as will be understood, this need not necessarily be the case and the members could be mounted the other way around, or both of the first and second members could be mounted on rotatable parts.

At least one of the first and second members can comprise a magnetic flux increaser within which a current flow is generated by the excitation coil's alternating magnetic field, and which in turn itself generates a magnetic field which acts to increase the magnetic flux density of the alternating magnetic field.

In a preferred embodiment, the excitation coil which generates the magnetic field which generates the current flow in the magnetic flux increaser is the same excitation coil which generates the magnetic field which is manipulated by the scale track(s) and sensed by the receiver coil(s) (and from which the relative position of the first and second members can be measured).

The magnetic flux increaser can comprise: at least one (electrical) conductor located radially (e.g. with respect to the axis of rotation) outside of the first member's scale track(s) and the second member's receiver and excitation coils, said at least one (electrical) conductor being hereinafter referred to as at least one "outer" conductor; and/or at least one (electrical) conductor located radially (e.g. with respect to the axis of rotation) inside of the first member's scale track(s) and the second member's receiver and excitation coils, said at least one (electrical) conductor being hereinafter referred to as at least one "inner" conductor. In preferred embodiments, the electrical conductivity of the outer and/or inner conductors is such that they have a resistivity of less than 1×10⁻⁶ ohms-metre (e.g. they could comprise copper which has a resistivity of about 1.7×10⁻⁸ ohm-metre).

The magnetic flux increaser can comprise both an outer conductor and an inner conductor. In such an embodiment, the second member's receiver and excitation coils could be located, in the radial dimension (e.g. with respect to the axis of rotation), between the outer and inner conductors. Similarly, the scale track(s) can be located radially between the outer and inner conductors.

Preferably such outer and inner conductors are separate. The outer and inner conductors can be physically separate. The outer and inner conductors can the outer and inner can be electrically-separate/insulated from each other.

The inner conductor could be substantially planar. The outer conductor could be substantially planar. In preferred embodiments, the planes of the inner and/or outer conductors are substantially parallel. Preferably, the inner and outer conductors could be substantially co-planar. Preferably the planes of the inner and/or outer conductors, the plane of scale track(s), and the planes of the excitation and receiver coils are all substantially parallel to each other (e.g. such that the angles between any such planes is not more than 5°, more preferably not more than 3°, especially preferably not more than 2°, and for instance not more than 1°).

As will be understood (and as explained herein), the magnetic flux increaser (e.g. the inner conductor and/or outer conductor) need not necessarily be located within the same plane as (need not necessarily be co-planar with) the receiver and excitation coils, or within the same plane as (need not necessarily be co-planar with) the scale track(s).

Optionally, the first member comprises a magnetic flux increaser (e.g. at least one "outer" conductor and/or at least one "inner" conductor). In such a case, it can be preferred that the magnetic flux increaser (e.g. at least one "outer" conductor and/or said at least one "inner" conductor) is substantially planar with the scale track(s). For example, in the case in which the outer and/or inner conductors are closed annular loops (described in more detail below), preferably the perpendicular distance between: i) the plane of the magnetic flux increaser (i.e. of the outer or inner conductor); and ii) the plane of the scale track(s) is not more than 7.5% (more preferably not more than 5%, especially preferably not more than 2%) of the diameter of the magnetic flux increaser, i.e. of the outer or inner conductor.

Optionally, the second member comprises a magnetic flux increaser (e.g. at least one "outer" conductor and/or at least one "inner" conductor). In such a case, it can be preferred that the magnetic flux increaser (e.g. at least one "outer" conductor and/or said at least one "inner" conductor) is substantially planar with at least one of the excitation and receiver coils. For example, in the case in which the outer and/or inner conductors are closed annular loops (described in more detail below), preferably the perpendicular distance between: i) the plane of the magnetic flux increaser (i.e. of the outer or inner conductor); and ii) the plane of the excitation and receiver coils is not more than 7.5% (more preferably not more than 5%, especially preferably not more than 2%) of the diameter of the magnetic flux increaser, i.e. of the outer or inner conductor.

Optionally, the first and second members each comprise a magnetic flux increaser (e.g. at least one "outer" conductor and/or at least one "inner" conductor).

Preferably the magnetic flux increaser does not extend/exist directly behind or directly in-front of the scale tracks, nor directly behind or directly in-front of the receiver and excitation coils.

For instance, the magnetic flux increaser (e.g. at least one "outer" conductor and/or said at least one "inner" conductor) can be provided on and located within the plane of the first member (e.g. within its first layer), and the receiver and excitation coils can be provided on and located within the plane of the second member (e.g. within its first layer) (the first and second members and their respective planes being axially offset, with respect to the axis of rotation, and therefore are not coplanar).

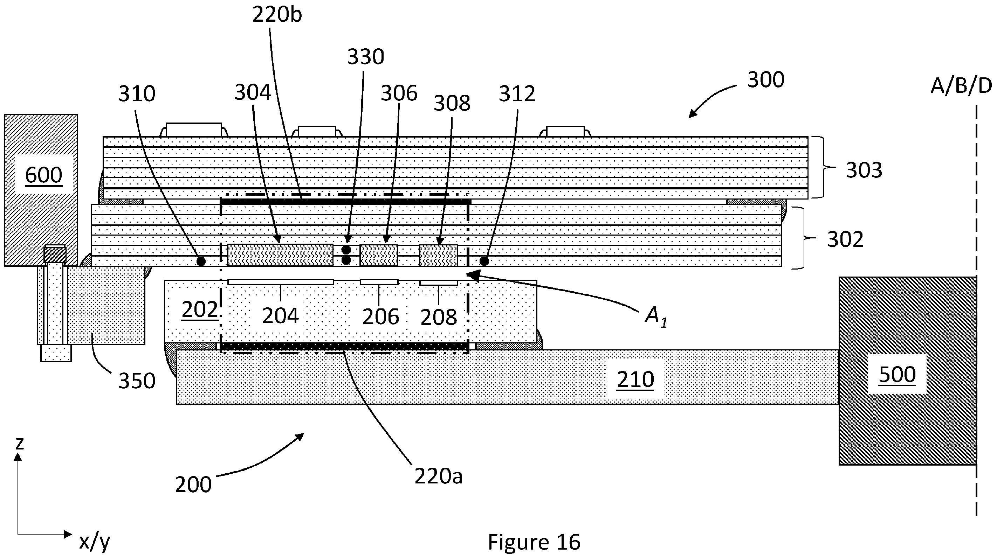

As will be understood, references herein to the magnetic flux increaser (e.g. the inner conductor and/or outer conductor) being located "radially" with respect to the scale track, and/or excitation coil, and/or receiver coil (e.g. "radially outside", "radially inside", or "radially between") is not intended to limit the relative configuration/arrangement of such features in the axial dimension (with respect to the axis of rotation), but rather is intended only to serve as to indicate their relative configuration in the radial dimension (with respect to the axis of rotation). In other words, use of the terms "radially outside", "radially inside", or "radially between" is not intended to require the features referred to as being in the same plane as each other. For example, in an embodiment where the second member comprises a magnetic flux increaser comprising an "outer" (e.g. closed) annular conductive loop and "inner" (e.g. closed) annular conductive loop, and where the second member is axially offset with respect to the first member, the scale tracks of the first member can still be located "radially between" the "outer" (e.g. closed) annular conductive loop and "inner" (e.g. closed) annular conductive loop, by virtue of their respective radial positions and dimensions. Indeed, this is the situation illustrated in the embodiment described above in connection with the Figure 16.

The scale tracks can all be centred on and extend (e.g. annularly) around a scale track axis and the at least one outer conductor, and/or the at least one inner conductor, can be substantially centred on the scale track axis. As mentioned above, the excitation coil could be centred on and extend (e.g. annularly) around a coil axis. The at least one outer conductor, and/or the at least one inner conductor, can be substantially centred on the coil axis. As also mentioned above, the receiver coil could be centred on and extend (e.g. annularly) around the coil axis. Accordingly, the at least one outer conductor, and/or the at least one inner conductor, can be substantially centred on the (excitation/receiver) coil axis.

The at least one "outer" conductor can comprise a closed annular (electrically) conductive loop, for example a conductive ring having a substantially constant radius).

The "outer" conductor can comprise a metal loop. Copper is one suitable metal, but as will be understood, other metals can be used. The "outer" conductor can comprise a wire-like loop. The "outer" conductor's (e.g. closed) annular conductive loop can be centred on and extend annularly around an "outer conductor axis".

The at least one "inner" conductor can comprise a closed annular electrically conductive loop or conductive disc, for example a conductive ring having a substantially constant radius.

The "inner" conductor can comprise a metal loop. Copper is one suitable metal, but as will be understood, other metals can be used. The "inner" conductor can comprise a wire-like loop. The "inner" conductor's (e.g. closed) annular conductive loop or conductive disc can be centred on (and extend around) an "inner conductor axis".

In a preferred embodiment, when assembled, the scale track axis, the coil axis, the outer conductor axis and the inner conductor axis are all substantially parallel to each other, and optionally are all substantially coincident/coaxial. As will be understood, the inductive rotary encoder can be configured such that, in use/when assembled, it is intended/configured to be arranged such that the scale track axis, the outer conductor axis, the inner conductor axis and the axis of rotation are all substantially parallel to each other, and optionally are all substantially coincident/coaxial.

The at least one scale track (e.g. the features thereof) could be contained in a first plane. The excitation coil(s) could be contained in a second plane. The receiver coil(s) could be contained in a third plane. Preferably, the second and third planes can be substantially parallel, and optionally substantially co-planar. When assembled together, it can be preferred that the first and second/third planes are substantially parallel (e.g. such that the angles between any such planes is not more than 5°, more preferably not more than 3°, especially preferably not more than 2°, and for instance not more than 1°).

As will be understood, typically, and in preferred embodiments of the invention which comprise an inductive rotary encoder, it is configured such that, in use, it is intended/configured to be arranged such that all of said axes (i.e. the scale track, excitation and receiver axes (or "coil axis"), and the axis of rotation) are substantially parallel to each other (at least to the extent such that during operation the first and second members do not physically come into contact with each other). As will be understood, the actual desired degree of parallelism will depend on various aspects of the inductive rotary encoder, such as its dimensions and the desired level of accuracy. Nevertheless, typically it will be desired that the angle between any of the scale track axis, the excitation and the receiver axes (or "coil axis") is not more than 5°, more preferably not more than 3°, especially preferably not more than 2°, and for instance not more than 1°. Also, typically it will be desired that the angle between i) any of the scale track axis, the excitation axis and the receiver coil axis (or "coil axis"), and ii) the axis of rotation, is not more than 5°, more preferably not more than 3°, especially preferably not more than 2°, and for instance not more than 1°.

In preferred embodiments, the inductive rotary encoder is configured such that, in use, it is intended/configured to be arranged such that all of said axes (i.e. the scale track axis, excitation and receiver axes (or "coil axis") and the axis of rotation can be (e.g. are) substantially coincident/coaxial (e.g. offset from each other by not more than 10% of the diameter of the receiver coil, more preferably by not more than 5% of the diameter of the receiver coil).

A scale track can comprise a series, e.g. an array, of (electrically) conductive/non-conductive scale features. In other words, a scale track can comprise a series of alternating (electrically) conductive and non-conductive scale features. A scale track can comprise a periodic arrangement of scale features. Accordingly, a scale track can comprise a periodic arrangement of (electrically) conductive/non-conductive scale features. In other words, a scale track can comprise a periodic series of alternating (electrically) conductive and non-conductive scale features. As will be understood, references herein to conductive (and non-conductive) relate to electrical conductivity, and for brevity will often be referred to as just conductive and non-conductive. As will be understood, the required or desired the level of resistivity of the conductive and non-conductive features can vary from application to application. Nevertheless, in connection with preferred embodiments of the invention, the electrically conductive scale features have a resistivity of less than 1×10⁻⁶ ohm-metre (e.g. copper has a resistivity of about 1.7×10⁻⁸ ohm-metre), and the resistivity of non-conductive features is greater than 1×10⁻⁴ ohm-metre, and for example can be significantly higher than that, for example, is even greater than 1 ohm-metre, for example greater than 1×10³ ohm-metre.

Preferably the magnetically permeable material has a very low electrical conductivity in order to avoid eddy currents being generated therein which might create interference. Of course, this might not be an issue if the effect of the magnetically permeable material dominates, but nevertheless, it can be preferred that the resistivity of the magnetically permeable material is greater than 1×10⁻⁴ ohm-metre, and for example in the embodiments described is significantly higher than that, for example, is even greater than 1×10³ ohm-metre.

Embodiments of the invention will now be described, by way of example only, with reference to the following drawings in which:
Figure 1 is an isometric view of an example inductive encoder according to the present invention;
Figure 2 is a schematic cross-sectional view of the inductive rotary encoder of Figure 1 mounted on a machine;
Figure 3 is an isometric view of the rotor of the inductive rotary encoder of Figure 1, viewed from its front side (i.e. its side that faces the stator when in use);
Figure 4 is a plan view of the front of the rotor of the inductive rotary encoder of Figure 1;
Figure 5 is an isometric exploded view of the rotor of the inductive rotary encoder of Figure 1;
Figure 6 is a cross-sectional view of the rotor of the inductive rotary encoder of Figure 1, taken along the line C₁-C₁ depicted in Figure 4;
Figure 7 shows a plan view of the rotor from its front side, wherein the fibreglass material of the first planar disc-shaped member is shown as being transparent (but its scale is not transparent), such that the magnetically permeable material of the rotor lies behind the scale;
Figure 8 shows a plan view of one example configuration of magnetically permeable material suitable for use in the rotor and stator;
Figure 9 shows a plan view of another example configuration of magnetically permeable material suitable for use in the rotor and stator;
Figure 10 is an isometric view of the stator of the rotary encoder of Figure 1, viewed from its front side (i.e. the side that faces the rotor in use);
Figure 11 is an isometric view of the stator of the rotary encoder of Figure 1, viewed from its back side (i.e. the side that faces away from the rotor in use);
Figure 12 is a plan view of the front side of the stator of the rotary encoder of Figure 13 is an isometric exploded view of the stator of the inductive rotary encoder of Figure 1;
Figure 14 is a cross-sectional view of the stator of the inductive rotary encoder of Figure 1, taken along the line C₂-C₂ depicted in Figure 4;
Figure 15 shows a schematic plan view of a quadrant of the stator's excitation and receiver coils and of the rotor's scale, depicting how they are overlayed each other, as would be the case when the stator and rotor are assembled as shown in Figure 2;
Figure 16 shows a cross-sectional view of the rotor and stator of the inductive rotary encoder of Figure 1 (e.g. taken along the lines C₁-C₁ and C₂-C₂) when assembled together for use, e.g. when mounted on a machine as depicted in Figure 2;
Figure 17 shows a plan view of the excitation coil and the outer and inner conductive loops of the stator, in isolation;
Figure 18 is a block diagram of the system for calculating a measure of the relative rotational position of the rotor and stator;
Figure 19 is a graph illustrating how the output of the Arc Tangent Calculator for each receiver coil varies with relative rotation of the stator and rotor;
Figures 20(a) and 20(b) respectively show isometric and plan views of an example excitation coil in isolation;
Figure 20(c) schematically illustrates how the component of the magnetic flux density that is perpendicular to the scale (i.e. parallel to the axis D around which the scale extends) as created by the circular, single-direction excitation coil of
Figures 20(a) and (b) varies across a bounded radial slice (indicated by the dashed-line in Figure 20(b)), both with (dashed line) and without (solid line) the layers of the magnetically permeable material of the rotor and stator, and the dash-dot line illustrates the effect on the component of the magnetic flux density that is perpendicular to the scale by providing the inner and outer conductor loops (on top of the effect provided by the layers of the magnetically permeable material of the rotor and stator) ;
Figure 20(d) shows a plan view of an example excitation coil having a folded-rectangular loop;
Figure 20(e) schematically illustrates how the component of the magnetic flux density that is perpendicular to the scale (i.e. parallel to the axis D around which the scale extends) created by the folded-rectangular loop of the excitation coil of Figure 16(d), varies across a bounded radial slice (indicated by the dashed-line in Figure 16(d)), both with (dashed line) and without (solid line) the layers of the magnetically permeable material of the rotor and stator, and the dash-dot line illustrates the effect on the component of the magnetic flux density that is perpendicular to the scale by providing the inner and outer conductor loops (on top of the effect provided by the layers of the magnetically permeable material of the rotor and stator).

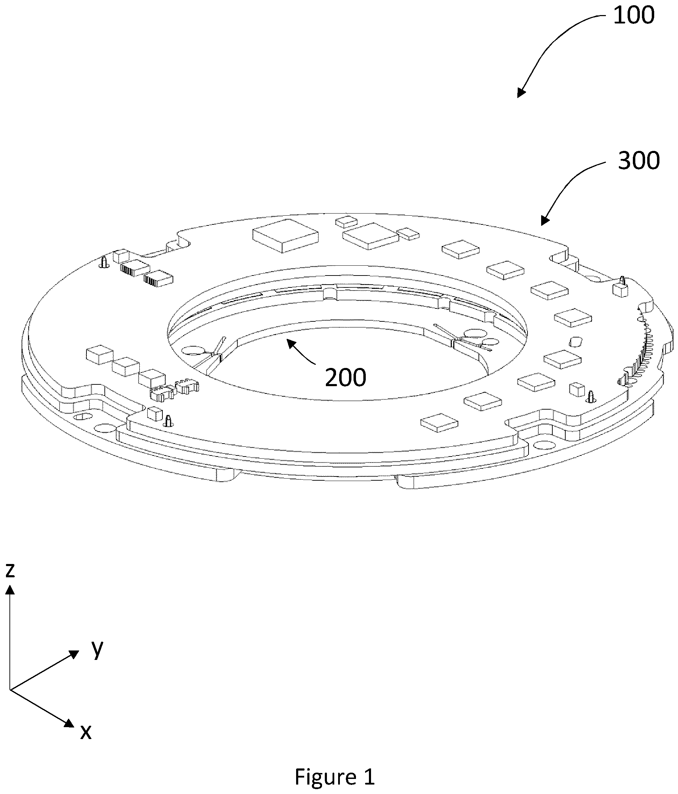

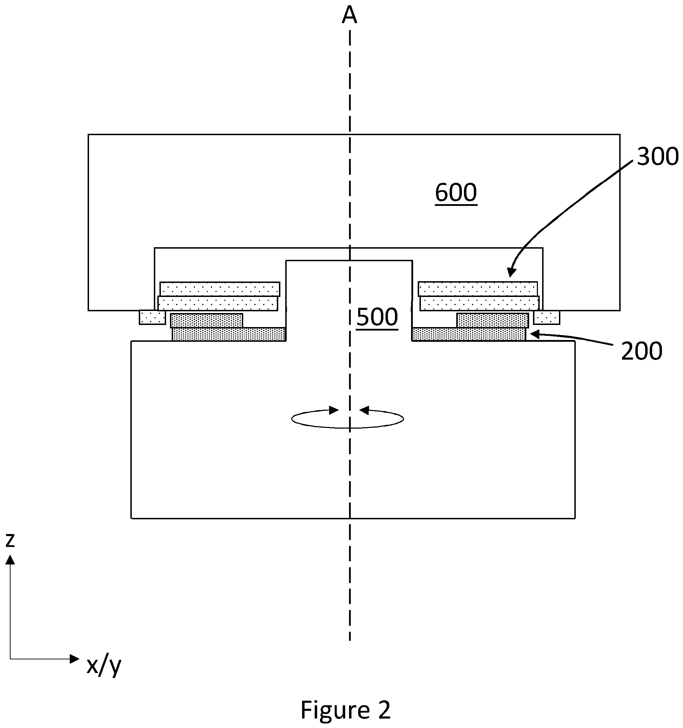

Referring to Figures 1 and 2, an inductive rotary encoder 100 comprises a rotor 200 and a stator 300. As schematically shown in Figure 2, in use, the rotor 200 is mounted to a part of a machine such as a shaft 500 that is rotatable relative to a static part 600 of the machine about an axis A, and the stator 300 is mounted to the static part 600 of the machine. Similar to known inductive rotary encoders, the stator 300 is an active/powered component and comprises excitation and receiver coils (described in more detail below) and associated electronics for creating and sensing an alternating electromagnetic field. Also similar to known inductive rotary encoders, and as explained in more detail below, the rotor 200 is a passive/unpowered component comprising a scale 201 which comprises scale features that manipulate the electromagnetic field sensed by the stator's 300 receiver coils such that the outputs of the stator's receiver coils are dependent on the relative rotational orientation of the stator 300 and rotor 200 about the axis A, whereby the relative rotational position (and/or derivatives thereof) of the stator 300 and rotor 200 (and hence of the static 600 and rotational 500 parts of the machine) can be measured/determined therefrom.

As will be understood, the rotor 200 and stator 300 could be configured the other way around (that is the rotor could have the active components, i.e. the excitation and receiver coils, thereon and the stator could have the passive components, i.e. the scale features, thereon) but due to the need for electrical connections it can be simpler and easier for the stator to be the active/powered component. Also, the rotor can be subject to high forces due to its motion and change in velocity, and so it can be beneficial to make the rotor the passive/unpowered component because the electronics on the active components can be susceptible to such forces. As will be understood, in a different embodiment, both of the members could rotate, that is both the "stator" and "rotor" could be rotatable, in which case both the "stator" 300 and "rotor" 200 could be referred to as "rotors", e.g. "rotor 1" and "rotor 2", or "active rotor" and "passive rotor". Nevertheless, for the sake of simplicity and illustration, the embodiment described has a static "stator" 300 and a "rotor" 200 that is rotatable relative to the stator 300.

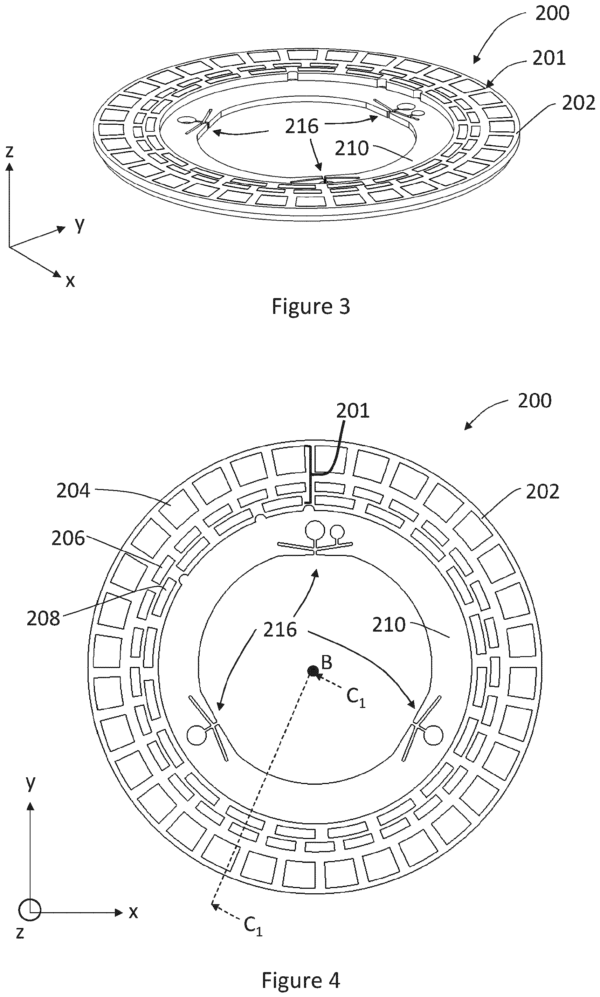

Referring to Figures 3 to 7 the rotor 200 is shown in isolation.

In the embodiment described, the rotor 200 comprises a first planar disc-shaped member 202 on the front of which (i.e. on its "stator-facing side") the scale's scale features are provided. As shown, the rear of the first planar disc-shaped member 202 is attached to another/second planar disc-shaped member 210 which as described in more detail below is in this embodiment used for mounting the rotor 200 onto the machine shaft 500. For brevity, hereinafter the first planar disc-shaped member 202 will be referred to as the first planar rotor member 202 and the second planar disc-shaped member 210 will be referred to as the second planar rotor member 210.

As mentioned above, the "front" of the rotor 200 is the side of the rotor which is configured to face the stator 300 when in use. Accordingly, references herein to relative directional terms with respect to the rotor, e.g. terms such as "front", "back", "rear", "in front of" and "behind", are made in connection therewith.

The scale 201 that is provided on the front of the first planar rotor member 202 is centred on and extends annularly around an axis B. In the embodiment described, the scale 201 comprises three scale tracks; a first scale track 204 centred on and extending annularly around the axis B, a second scale track 206 centred on and extending annularly around the axis B, and a third scale track 208 centred on and extending annularly around the axis B. As will be understood, in other embodiments, the scale 201 could comprise fewer or more scale tracks than that of the embodiment shown (and optionally could comprise just one scale track).

In the embodiment described, each scale track comprises a periodic series of scale features. The periods of the scale features of the first 204, second 206 and third 208 scale tracks are different to each other. The first 204, second 206 and third 208 scale tracks are configured such that each scale track has an integer number of periods per revolution, and are arranged such that the phase relationship between the scale features of the three scale tracks at any angle about the axis B is mutually exclusive compared to any other angle of rotation. In other words, the first 204, second 206 and third 208 scale tracks are configured such that the phase relationship of the scale features (i.e. the combination of the phase values) of the scale tracks is unique for each angle about the axis B. As will be understood, other arrangements and configurations are possible. For instance, they need not all have different periods, and/or one or more of the scale tracks could have a non-periodic arrangement of scale features.

As shown, the first 204, second 206 and third 208 scale tracks are arranged concentrically with each other, and are all centred on the same axis B. As also shown, the width as measured in the radial dimension (e.g. "radial width") of the first scale track 204 is larger than that of the second 206 and third 208 scale tracks, and in the embodiment shown, the radial width of the first scale track 204 is about double that of the second 206 and third 208 scale tracks. However, this need not necessarily be the case. For instance the radial width of all three scale tracks could be the same, or one or both of the second 206 and third 208 scale tracks could be larger than the radial width of the first scale track 204.

In the embodiment described, the first planar rotor member 202 is made from a single layer of fibreglass about 1.6 mm thick (e.g. it can be a printed circuit board "PCB" made from a single layer of FR-4), has a generally circular shape and has a hole extending through its middle such that the cylindrical shaft 500 can be passed therethrough.

In the embodiment described, the scale features 204, 206, 208 are electrically conductive (in this embodiment they are copper, and are formed on the first planar disc-shaped member by etching/milling away a copper coating on the fibreglass material of the first planar member 202; although could be formed via other processes, such as copper plating). In an alternative embodiment, the first planar rotor member 202 could comprise an electrically conductive material, wherein non-conductive features are formed thereon so as to provide the scale features.

In the embodiment described, the second planar rotor member 210 to which the first planar rotor member 202 is attached, is formed from a thin planar sheet of metal (in this embodiment, stainless steel) which is about 1.5 mm thick. For context, the outer diameter of the second planar rotor member 210 in this embodiment is about 100 mm. As will be understood, the invention is not limited to discs of such a size, and such dimensions are given merely as an example. As per the first planar rotor member 202 on which the scale features are provided, the second planar rotor member 210 has a hole extending through its middle such that the machine shaft can be passed therethrough.

As will be understood, the first planar rotor member 202 and/or the second planar rotor member 210 could be made from materials other than those described (such as ceramic), need not necessarily have a circular or disc-like configuration, and need not necessarily have a hole extending therethrough, and need not even be planar (and hence they could just be referred to as the first rotor member 202 and the second rotor member 210), although the front surface on/at which the scale 201 is provided is most preferably planar.

In the embodiment described, the second planar rotor member 210 comprises radial-locating features 216 which are configured to engage with, and radially locate the second planar rotor member 210 on, the cylindrical shaft 500 when it is inserted through the hole in the metal planar member 210. In the particular example embodiment, the radial-locating features 216 comprise a number of cantilevered spring members 216 which are provided in plane with the second planar rotor member 210 and spaced around its inner diameter, for engaging with, and radially locating the second planar rotor member 210 on, the cylindrical shaft 500 when it is inserted therethrough (e.g. as described in WO2021/116660). In particular, the second planar rotor member 210 comprises three pairs of cantilevered spring members 216. Each pair of cantilevered spring members 216 is provided in plane with the second planar rotor member 210 and spaced around the edge of its hole. Also, each pair of cantilevered spring members 216 is configured such that the free ends of the cantilevered spring members are proximal each other and their fixed ends are distal each other (e.g. see Figure 4). In other words, the cantilevered spring members 216 in each pair point toward each other, rather than away from each other.

When the second planar rotor member 210 is push-fit onto a shaft 500 which is slightly larger than the space between the pairs of the cantilevered spring members 216a, 216b, 216c, the shaft 500 engages the side of each of the cantilevered spring members 216 facing the middle of the hole, and causes each of them to bend slightly. The elasticity of the material of the cantilevered spring members 216 causes a reaction force on the shaft 500 such that the second planar rotor member 210, and hence the first planar rotor member 202 on which the scale features are provided, radially self-locates on the shaft 500. If desired, the rotor 200, e.g. the second planar rotor member 210, can be further secured to the shaft 500, e.g. via one or more mechanical fixings and/or adhesive. If desired, the radial location of the rotor 200 can be manipulated away from the default radial position provided by the cantilevered spring members 216 to a new radial position, and then the rotor 200 can be secured to the machine shaft 500 at the new radial position. As will also be understood, it might be that the second planar rotor member 210 has no radial-locating features at all. For instance, it might have an oversized hole through which the shaft 500 is passed. In an alternative embodiment, the second planar rotor member 210 might have no hole whatsoever and, for example, might be mounted to a flat face of a rotating machine part. In other embodiments, the second planar rotor member 210 might have radial-locating features provided on its outer diameter (e.g. as described in WO2022/074368).

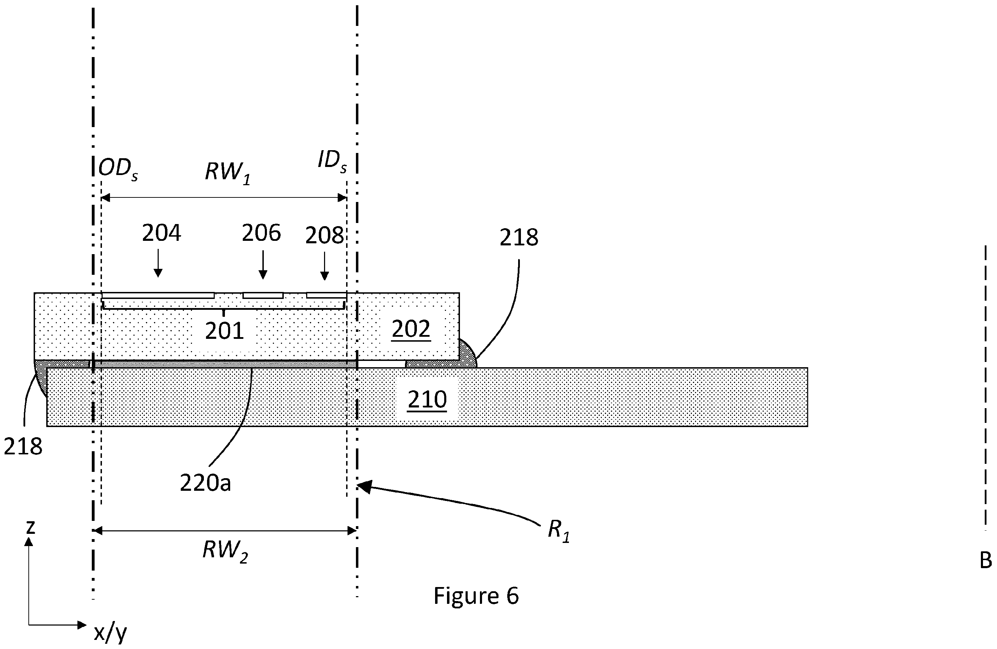

The first planar rotor member 202 on which the scale features are provided is secured to the second planar rotor member 210 such that they are arranged substantially concentrically with respect to each other. In the particular embodiment described, adhesive (e.g. schematically illustrated in Figure 6 by reference numerals 218) is used to attach the first planar rotor member 202 to the second planar rotor member 210.

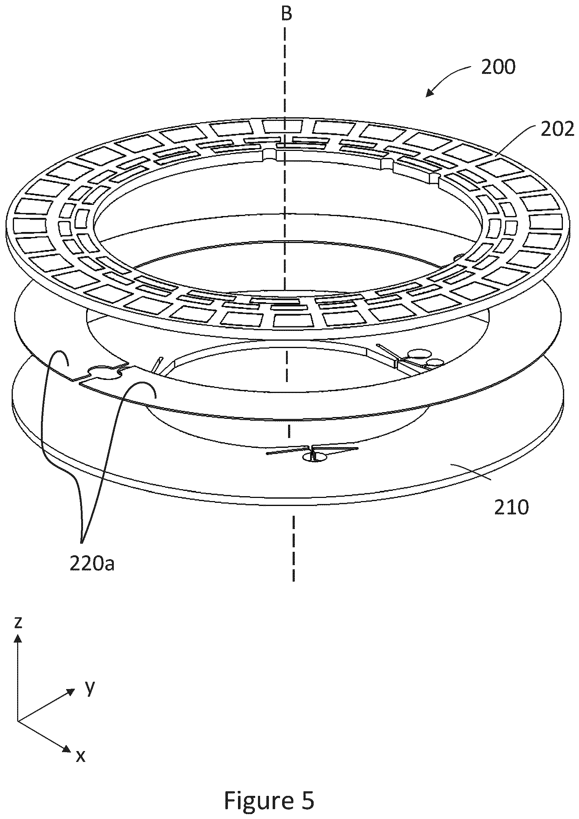

As illustrated in Figures 5 to 7, magnetically permeable material 220a is located between the first planar rotor member 202 and the second planar rotor member 210. In particular, magnetically permeable material 220a is arranged in the vicinity of the first 204, second 206 and third 208 scale tracks such that it manipulates the electromagnetic field created by the stator's excitation coil 330 (explained in more detail below) in the vicinity of the first 204, second 206 and third 208 scale tracks, so as to thereby increase the magnetic flux density of the magnetic field within which the first 204, second 206 and third 208 scale tracks reside (compared to if the magnetically permeable material 220a was not present). In effect, the magnetically permeable material 220a provides a low-reluctance return path at the operating frequency of the inductive encoder (i.e. the "drive frequency of the excitation coil"/the "carrier frequency") which thereby increases the magnetic permeability in the vicinity of the excitation coil within which the scale features and receiving coils reside, which in turn leads to an increase in the magnetic flux density. Such an increase in magnetic flux density results in an increase in the magnetic flux density passing perpendicularly into the scale features, which in turn will result in larger eddy currents being generated within the scale features 204, 206, 208 which in turn will result in a greater amplitude modulation of the magnetic field(s) sensed by the respective first 304, second 306 and third 308 receiver coils of the stator 300 (compared to if the magnetically permeable material 220a was not present). In the present example, where the second planar rotor member 210 is made from metal/is electrically conductive, the magnetically permeable material 220a has the additional benefit of preventing the electromagnetic field from the excitation coil 330 generating eddy currents within the second planar rotor member 210 that would otherwise generate an electromagnetic field of its own which would act to cancel out the excitation coil's electromagnetic field.

The magnetically permeable material 220a is magnetically permeable in that it has a high relative magnetic permeability (i.e. a relative magnetic permeability *µᵣ* of at least 2, preferably at least 10, more preferably at least 20, especially preferably of at least 30, and in the example described is at least 60) at the operating frequency of alternating magnetic field/the stator's excitation coil.

In the embodiment described the operating/drive frequency of alternating magnetic field/the stator's excitation coil is in the region of 1 to 10 MHz, for example approximately 3 MHz, but as will be understood, inductive encoders can be configured to operate at significantly different frequencies, for instance (but not limited to) as low as 100 kHz and for example (but not limited to) as high as to 20 MHz.

Preferably the magnetically permeable material has a very low electrical conductivity in order to avoid eddy currents being generated therein which might create interference with the electromagnetic field created by the excitation coil 330. In the embodiments described, the resistivity of the magnetically permeable material is greater than 1×10³ ohm-metre.

As described in more detail below, in the embodiment described the magnetically permeable material 220a sits behind (and in particular, in the embodiment shown sits directly behind) the scale 201, and is secured to the back of the fibreglass board (PCB) of the first planar rotor member 202 which in this embodiment is 0.8 mm thick. Accordingly, the distance between the scale 201 and the magnetically permeable material 220a in the axial direction (i.e. parallel to the axis B) is approximately 0.8 mm. Other configurations and distances are possible and can depend on factors such as the relative magnetic permeability *µᵣ* of the magnetically permeable material 220a, and the strength of the electromagnetic field generated by the excitation coil 330.

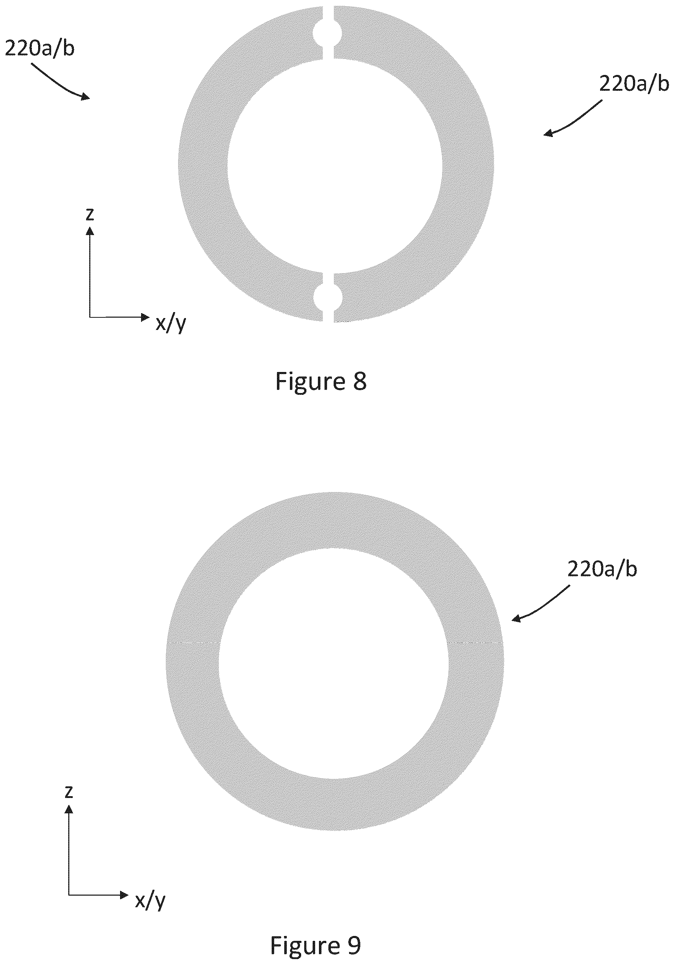

Figures 8 and 9 illustrate plan views of example configurations of the magnetically permeable material 220a. Figures 5, 6 and 7 illustrate how the magnetically permeable material 220a of the embodiment of Figure 8 is arranged between the first planar rotor member 202 and the second planar rotor member 210.

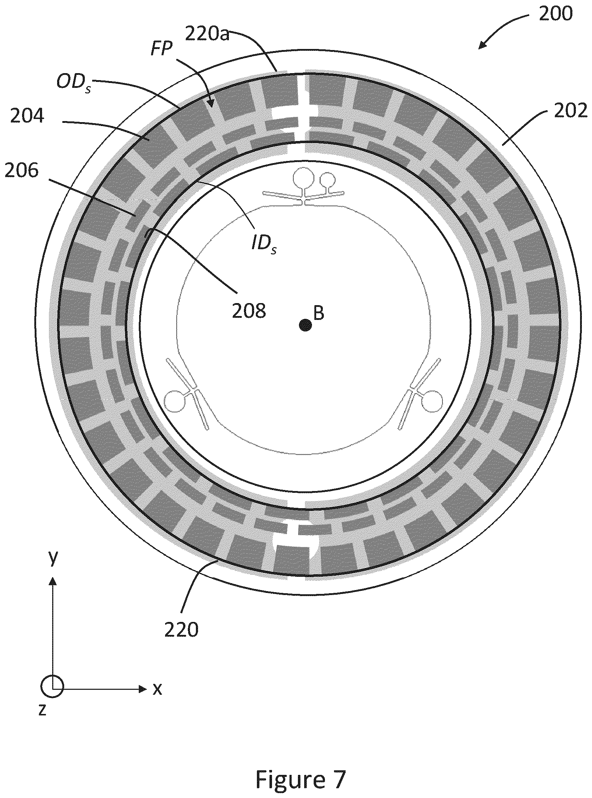

As depicted, in particular in Figure 6, the magnetically permeable 220a is arranged so as be directly behind the first planar rotor member 202; i.e. on the side of the first planar rotor member 202 that is distal (or "faces away from") the stator 300 when in use. In particular, as illustrated in Figures 6 and 7, in the embodiment described, the magnetically permeable material 220a is arranged so as to lie directly behind the rotor's scale 201 (as opposed to being in an offset radial position with respect to the scale). Another way of saying that the magnetically permeable material sits or lies directly behind the scale, could be to say that the magnetically permeable material 220a is "axially aligned" with respect to the scale 201, in that there is at least one line parallel to the axis B that can pass through both the scale and the magnetically permeable material 220a. As illustrated in Figure 6, in the embodiment described, the (outer and inner) radial bounds of the magnetically permeable material 220a define a notional radial region *R₁* (identified by the dash-and-double-dot lines, and having a radial width *RW₂*) the sides of which extend parallel to the axis D, within/between which the scale 201 is radially positioned.

The magnetically permeable material 220a is arranged so as to have a ring/loop-like form which is centred on and extends annularly around the axis B. As shown in Figures 5, 7 and 8, the magnetically permeable material 220a need not extend continuously annularly (i.e. around the axis B), but rather could be provided in a plurality of arcuate segments/strips. (In the embodiment of Figure 9, the magnetically permeable material 220a is provided as a continuous circular form and could be used in place of the two strips of Figure 8.) In the embodiment of Figures 5, 6, 7 and 8, the magnetically permeable material 220a is provided in two arcuate (in particular, semi-circular) strips, but of course there could be more than two arcuate strips. Indeed, because the magnetically permeable material 220a provides a low-reluctance return path at the operating frequency , the magnetically permeable material 220a could be provided by a series of compactly arranged radially-extending strips (wherein the extent of the series of said strips extends around the axis B) so as to provide a similar effect as a continuous loop of magnetically permeable material 220a.

As is clear from Figures 7 and 8, there is a gap between the ends of the two semi-circular strips 220a of magnetically permeable material. Accordingly, in the embodiment described, the magnetically permeable material of the rotor does not extend along 100% of the length of the scale 201, but rather only about 95% of its length (which in this embodiment, is its circular extent). Accordingly, as is most clearly visible from Figure 7, in this embodiment, the magnetically permeable material 220a does not subsist within/cover 100% of the scale's 201 footprint *FP* (i.e. the area between the scale's inner (*IDₛ*) and outer (*ODₛ*) diameters), due to the gap between the ends of the two semi-circular strips 220a of magnetically permeable material. Nevertheless, in this embodiment the magnetically permeable material 220a does still subsist within/cover at least 95% of the scale's 201 footprint. As shown in Figure 8, the round cut-out features at the ends of each semi-circular strips 220a is purely optional, and the ends could have a different shape, including being flat.

As illustrated in Figure 6, in the embodiment described, the radial width *RW₂* and radial position of the magnetically permeable material 220a is substantially matched with the radial width *RW₁* and radial position of the scale 201 such that it sits directly behind and extends over at least the entire width of all scale tracks provided on the rotor. In particular, in the embodiment described, the magnetically permeable material 220a is actually slightly radially wider than the scale 201 such that it extends just beyond both the inner ID and outer OD diameters of the scale 201. However, as will be understood, this need not necessarily be the case, and the radial width *RW₂* of the magnetically permeable material 220a could be exactly the same as or narrower than that *RW₁* of the scale 201. Additionally/alternatively, the radial location of the magnetically permeable material 220a could be partially radially offset with respect to the scale 201. As explained above, the point of the magnetically permeable material 220a is such that it increases the magnetic flux density of the magnetic field within which the first 204, second 206 and third 208 scale tracks reside (compared to if the magnetically permeable material 220a was not present), and so as will be understood, there are various ways in which the magnetically permeable material 220a could be configured and located, with varying degrees of beneficial effect. For instance, the magnetically permeable material 220a could be partially offset in the radial dimension with respect to the scale 201, (e.g. such that it does not extend behind the entire radial width *RW₁* of the scale, but extends only partially behind the scale and extends beyond either the inner or outer radial bound of the scale 201).

In the embodiment described, each of the semi-circular strips of magnetically permeable material 220a are formed from a sheet material having magnetic particles dispersed therethrough. The sheet material could be a ferrite sheet for example. In the embodiment described, each of the semi-circular strips of magnetically permeable material 220a comprises a sheet having a polymer base and comprises micron-sized magnetic powders dispersed throughout the polymer base. In the embodiment described, the sheets/strips are approximately 0.2 mm thick, but of course different thickness could be used. The semi-circular strips could be cut from a larger sheet of such material, a suitable example of which is the Series EFA sheet available from KEMET Electronics Corporation, under the FLEX SUPPRESSOR^{®} branding (FLEX SUPPRESSOR is a registered trade mark of Tokin Corporation).

As will be understood, there can be other ways of providing a layer of magnetically permeable material between the first planar rotor member 202 on which the scale features are provided and the second planar rotor member 210.

For instance, a magnetic paste could be used instead of or as well as the described sheets.

In alternative, albeit less preferred embodiments, there could be separate annularly-extending regions of magnetically permeable material 220a, e.g. one which is matched with the first scale track 204, one which is matched with the second scale track 206 and one which is matched with the third scale track 208. For example, there could be provided a first ring of magnetically permeable material 220a arranged directly under (i.e. "axially aligned with") the first scale track 204, a second ring of magnetically permeable material 220a arranged directly under (i.e. "axially aligned with") the second scale track 206, and a third ring of magnetically permeable material 220a arranged directly under (i.e. "axially aligned with") the third scale track 208. The separate (e.g. concentric) rings of magnetically permeable material 220a could be radially spaced from each other, or radially abutting.

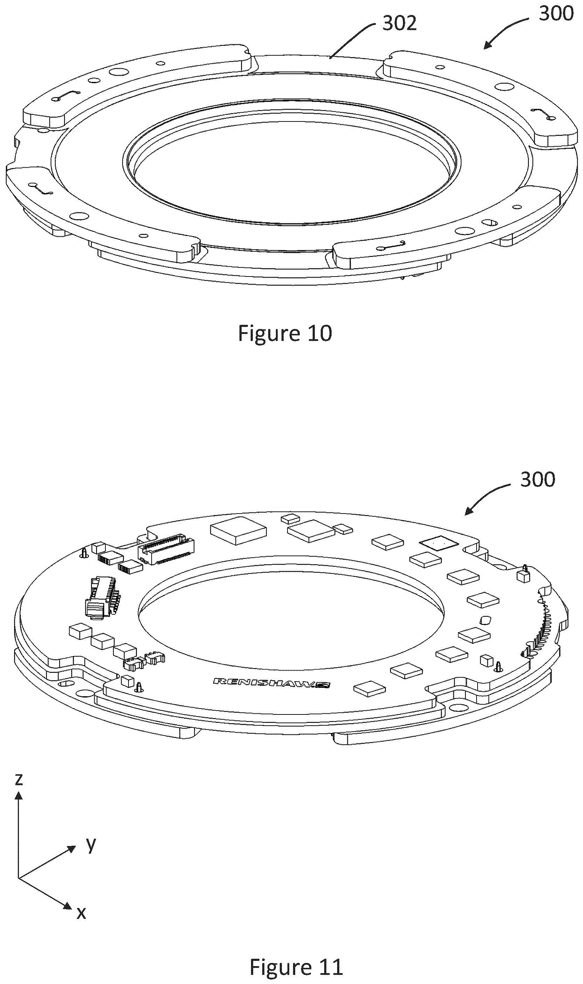

Turning now to Figures 10 to 14, the stator 300 is shown in isolation.

In the embodiment described, the stator 300 comprises a first planar disc-shaped member 302 on the front of which (i.e. on its side facing the rotor 200 when in use) the stator's the excitation 330 and receiver 304, 306, 308 coils (not shown in Figure 10) are provided.

As mentioned above, the "front" of the stator 300 is the side of the stator which is configured to face the rotor 200 when in use. Accordingly, references herein to relative directional terms with respect to the stator, e.g. terms such as "front", "back", "rear", "in front of" and "behind", are made in connection therewith.

As shown, the rear of the first planar disc-shaped member 302 is attached to another/second planar disc-shaped member 303, on the back of which (i.e. on its side facing away from the rotor 200 when in use) electronic components 320 for driving the excitation coil 330 and processing signals received from the receiver coils 304, 306, 308 are provided. For brevity, hereinafter the first planar disc-shaped member 302 will be referred to as the first planar stator member 302 and the second planar disc-shaped member 303 will be referred to as the second planar stator member 303. The stator 300 also comprises four mounting blocks 350, spaced equiangularly around the edge of the front face of the first planar disc-shaped member, which as explained in more detail below are used for mounting the stator 300 to the static part 600 of the machine and in this embodiment one of which is used to electrically ground the stator to machine on which it is mounted, e.g. via a grounding pin 601.

The first planar stator member 302 is secured to the second planar stator member 303 such that they are arranged substantially concentrically with respect to each other. In the particular embodiment described, adhesive (e.g. schematically illustrated in Figure 6 by reference numerals 318) is used to attach the first planar stator member 302 to the second planar stator member 303. The first planar stator member 302 is electrically connected to the second planar stator member 303 via edge plating. Adhesive 318 is also used to attach the four mounting blocks 350 to the first planar stator member 302.

In the embodiment described, the first 302 and second 303 planar stator members are made from multiple layers (in this embodiment six layers) of fibreglass, and each have a generally circular shape with a hole extending through its middle such that the cylindrical shaft 500 can be passed therethrough. For example, they can each be a printed circuit board "PCB" made from multiple layers of FR-4. In the embodiment described, the thickness of the first planar stator member 302 is approximately 1.6 mm, and the same is also true for the second planar stator member 303. As will be understood, the invention is not limited to discs of such a size, and such dimensions are given merely as an example.

As will be understood, the first planar stator member 302 and/or the second planar stator member 303 could be made from materials other than those described (such as ceramic), need not necessarily have a circular or disc-like configuration, and need not necessarily have a hole extending therethrough, and need not even be planar (and hence they could just be referred to as the first stator member 302 and the second stator member 303), although the front surface on/at which the excitation 330 and receiver coils 304, 306, 308 are provided is most preferably planar.

The stator's excitation coil 330 (which could also be referred to as a "transmit coil") is provided on the front side/face of the first planar stator member 302 and is centred on and extends annularly around the axis D. In terms of the receiver coils, a first scale receiver coil 304, a second scale receiver coil 306, and a third scale receiver coil 308, are also provided on the front side/face of the first planar stator member 302. The receiver coils 304, 306, 308 are all concentrically arranged, centred on, and extend annularly around the axis D.

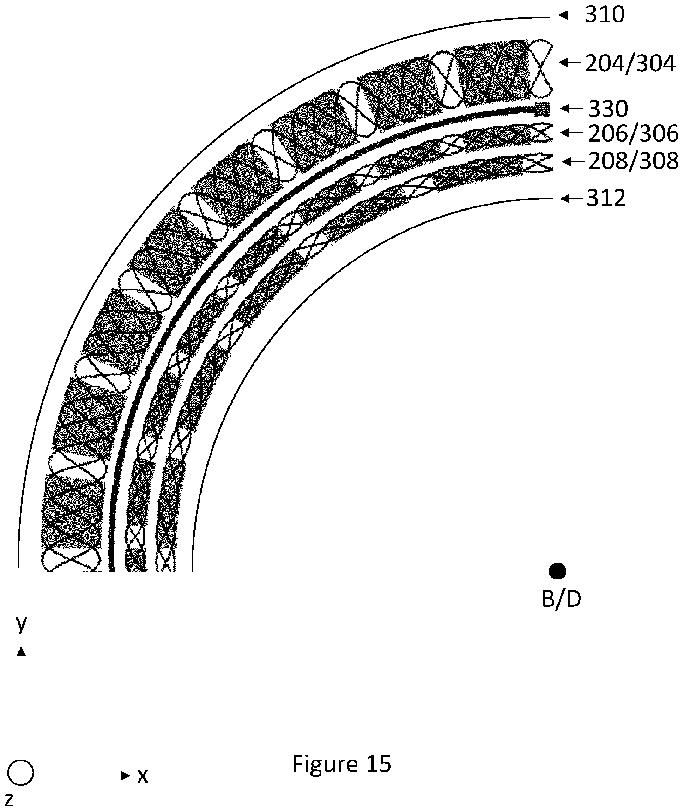

As shown, the width as measured in the radial dimension (e.g. "radial width") of the first 304 receiver coil is larger than that of the second 306 and third 308 receiver coils. In the embodiment shown, the radial width of the first 304 receiver coil is about double that of the second 306 and third 308 receiver coils. As illustrated in Figure 15 the radial positions and radial widths of the first scale track 204 and first receiver coil 304 are substantially the same, the radial positions and radial widths of the second scale track 206 and second receiver coil 306 are substantially the same, and the radial positions and radial widths of the third scale track 208 and third receiver coil 308 are substantially the same. Accordingly, when assembled as shown in Figures 2, 15 and 16 such that the axes B and D are coaxial, the first scale track 204 and first 304 receiver coil are substantially radially aligned/coincident, the second scale track 206 and second receiver coil 306 are substantially radially aligned/coincident, and the third scale track 208 and third receiver coil 308 are substantially radially aligned/coincident.

As will be understood, because the receiver coils progress around the axis D along a wave-like (e.g. sinusoidal) path, another appropriate term for radial width of a receiver coil is "coil amplitude".

The radial width of the coil and scale track/features can have a significant impact on the amplitude of a (e.g. demodulated/baseband) signal obtained therefrom. As explained in more detail below, because the first scale track 204 has the highest number of integer periods per revolution compared to the other tracks, it can be used to obtain higher resolution position information compared to the other tracks, and so in this embodiment the first scale track 204 and the associated first receiver coil 304 are wider than the second 206/306 and third 208/308 scale tracks/receiver coils so as to increase the signal-to-noise ratio of a (e.g. demodulated/baseband) signal obtained from the first receiver coil, thereby helping to improve positional accuracy. As will be understood, this need not necessarily be the case, e.g. they could all have the same width, or for instance the width of the second and/or third receiver coils could be larger than that of the first receiver coil.

In the embodiment described, each of the first 304, second 306 and third 308 receiver coils actually comprise a first sinusoidally extending differential copper coil and a second sinusoidally extending differential copper coil. The first and second differential coils are overlapping and are phase shifted by 90° relative to each other. Accordingly, the first differential coil could be referred to as a SIN coil and the second differential coil could be referred to as COS coil. Accordingly, each of the first 304, second 306 and third 308 receiver coils will actually output a pair of signals which are in quadrature (i.e. the signals are phase-shifted by 90°), and so, for example, can be labelled as SIN and COS signals. As will be understood, other configurations are possible, such as a three-phase system, comprising three sets of coils phase shifted by 60°. In another embodiment, each track/channel could comprise just a single coil, but such a system would be less accurate.

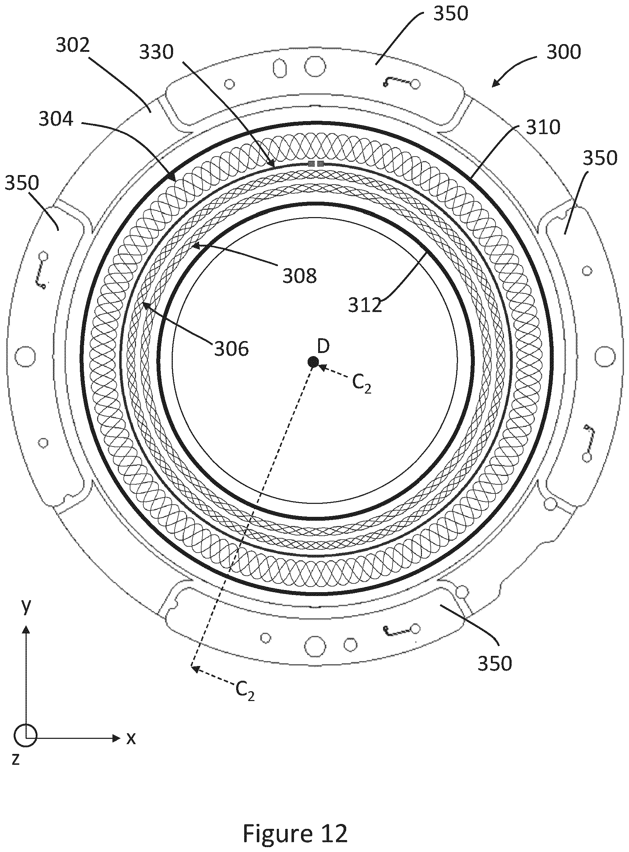

As shown in Figures 12 and 15, the first 304, second 306, and a third 308 scale receiver coils are sinusoidal in that they progress around the axis D along a substantially sinusoidal path. In fact, in the embodiment described, each of the SIN and COS coils of the first 304, second 306 and third 308 receiver coils are actually differential coils, having a clockwise and an anti-clockwise turn per period to cancel the residual magnetic field. The coil shape is sinusoidal for harmonic suppression reasons. Of course, the coil shape/path does not have to be sinusoidal. For instance, the coils could have a different periodic shape/path to pick up the modulation from the scale. Also, they don't have to be differential coils. In the embodiment described, the period of the sinusoidal form of the first 304, second 306, and a third 308 scale receiver coils are different to each other (and in the example described are configured such that the period of the sinusoidal form of the first 304, second 306, and a third 308 scale receiver coils matches that of their corresponding scale track). As will be understood, this doesn't have to be the case, although doing so can be beneficial from a processing and signal quality point of view.

In the embodiment described, each of the first 304, second 306 and third 304 receiver coils comprise a single-turn (or "single loop") coil. In another embodiment, one or more of receiver coils could comprise a multiple-turn (or "multiple-loop") coil.

As explained in more detail below, when in use/assembled, the inductive encoder apparatus is configured such that: i) the first scale receiver coil 304 and the first scale track 204 are arranged directly in front of (i.e. "directly facing") each other (in other words the first scale receiver coil 304 is arranged axially in-line with/directly above in the orientation shown in Figure 16 the first scale track 204); ii) the second scale receiver coil 306 and the second scale track 206 are arranged directly in front of (i.e. "directly facing") each other (in other words the second scale receiver coil 306 is arranged axially in-line with/directly above in the orientation shown in Figure 16) the second scale track 206; and iii) the third scale receiver coil 308 and the third scale track 308 are arranged directly in front of (i.e. "directly facing") each other (in other words the third scale receiver coil 308 is arranged axially in-line with/directly above in the orientation shown in Figure 16) the third scale track 208.

There is also provided on the front side/face of the first planar stator 302 magnetic flux increasers within which a current flow is generated by the excitation coil's 330 magnetic field, and which in turn itself generates a magnetic field which acts to increase, in the region of the receiver coils 304, 306, 308, the magnetic flux of the magnetic field sensed by the receiver coil 304, 306, 308. In the embodiment described, the magnetic flux increasers are in the form of an outer conductive loop 310 made from conductive material (in this embodiment, copper) and an inner conductive loop 312 made from conductive material (again, in this embodiment, copper). The outer 310 and inner 312 conductive loops are centred on and extend annularly around an axis D.

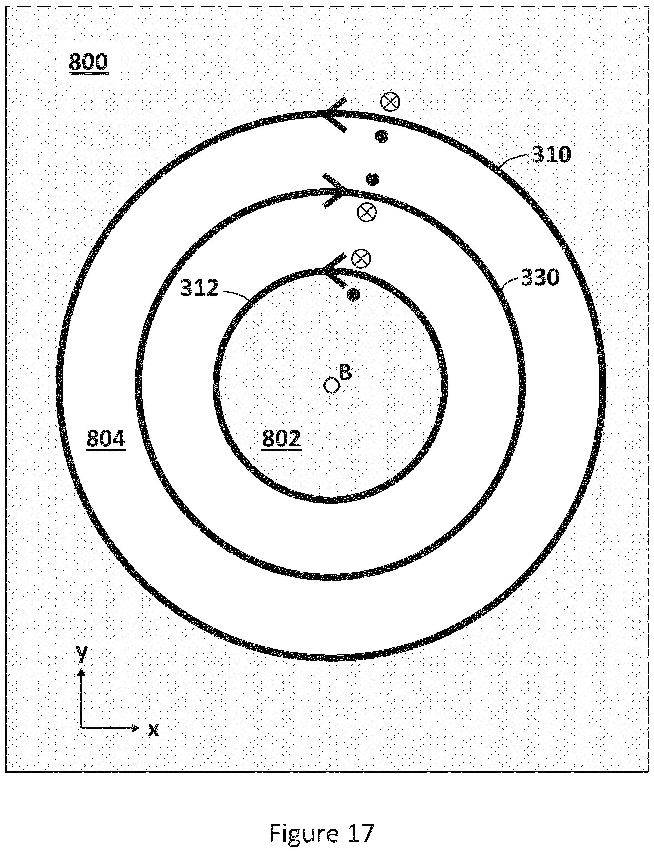

As explained in more detail below in connection with Figure 17, the outer 310 and inner 312 conductive loops help to increase the magnetic flux density in the radial space between them, thereby helping to increase the signal strength and system sensitivity of the stator's receiver coils. In the embodiment described, the outer conductive loop 310 is located radially outside all of the coils on the stator (i.e. radially outside: i) the excitation coil, and ii) the first, second and third receiver coils). Also, in the embodiment described the inner conductive loop 312 is located radially inside of all of the coils on the stator (i.e. radially inside: i) the excitation coil and ii) the first, second and third receiver coils). Accordingly, in other words, all of the coils on the stator (i.e. i) the excitation coil, and ii) the first, second and third receiver coils) are located radially between the outer 310 and inner 312 conductive loops.

In the embodiment described, the outer 310 and inner 312 conductive loops are closed, single-turn, plain circular copper loops. However, this need not necessarily be the case and the outer 310 and inner 312 conductive loops could take other forms. For instance, the outer 310 and inner 312 conductive loops could have a multiple-turn helical from (e.g. having a fixed radius but which extends axially through the member), could comprise a multiple-turn spiral form (e.g. having a constantly changing radius), could progress with a wave-like (e.g. sinusoidal) form/path around the axis. Optionally, multiple separate outer conductive loops 310 could be provided and/or multiple inner conductive loops 312 could be provided. Furthermore, one or both of the outer 310 and/or inner 312 conductive loops could be omitted if desired.

As will be understood, use of the terms herein of "radially outside", "radially inside", or "radially between" is not intended to require the features referred to as being in the same plane as each other. Indeed, in other embodiments, one or both of the outer 310 and inner 312 conductive loops can be provided on the rotor 200 instead of (or in addition to) the stator 300, e.g. on the first planar rotor member 202. Accordingly, the outer 310 and inner 312 conductive loops do not need to be in plane with each other, and nor do they need to be in plane with the excitation 330 or receiver 304, 306, 308 coils.

The presence of such magnetic flux increasers (e.g. one or both of the outer 310 and/or inner 312 conductive loops) can be particularly useful in those embodiments in which the number of excitation coils is fewer than the number of scale tracks and respective receiver coils (e.g. in order to improve magnetic flux density and hence signal strength thereof). Additionally/alternatively, the presence of one or both of the outer 210 and/or inner 212 conductive loops is particularly useful for boosting the magnetic flux density (and hence boosting the component of the magnetic flux density that is perpendicular to the scale) in regions radially distal to the excitation coil, which might be desirable where an increase in the radial width of a receiver coil is desired and/or for those embodiments in which a receiver coil cannot be located directly next to the excitation coil (e.g. where there is another receiver coil between it and the excitation coil that generates the electromagnetic field which it is configured to sense) and/or where the excitation coil is configured on only one side of a receiver coil, such as due to it being a "single direction" excitation coil (described in more detail below). Indeed, all of these are the case in the embodiments of Figures 4 to 7, 15, 16(a), 16(b) and 17 where: i) a single direction excitation coil is used 330, ii) the first scale track 204 and first receiver coil 304 have a relatively large radial width, and iii) the second receiver coil 306 is located radially between the third receiver coil 308 and the excitation coil 308. In this embodiment, the inner 212 conductive loop is particularly useful for boosting the component of the magnetic flux density that is perpendicular to the scale in the region of the third scale track 208 and associated third receiver coil 308 which (due to the presence of the second scale track 206 and second receiver coil 306 lying radially between the third scale track 208 and third receiver coil 308 and the excitation coil 330) lie relatively radially far away from the excitation coil 330 compared to the first 204, 304 and second 204, 306 scale tracks and receiver coils. Similarly, the outer 210 conductive loop is particularly useful for boosting the component of the magnetic flux density that is perpendicular to the scale in the radially distal region of the first scale track 204 and first receiver coil 308 (which are significantly radially wider than that of the second 206, 306 and third 208, 308 scale tracks and receiver coils and therefore can benefit from such boosting). This is explained in more detail below in connection with Figures 16(b) and 16(c).

In the embodiment described, the excitation coil 330 is located radially between the first scale receiver coil 304 and the second scale receiver coil 306 and comprises a single-turn (or "single loop") coil. Furthermore, in the embodiment described, the excitation coil 330 is a "single direction" excitation coil in that it comprises a conductor wire extending along a circular path around the axis D in a single direction, such that the current flows around the axis D in one direction only (e.g. clockwise or anti-clockwise) at any given instant in time. In the particular embodiment described, the conductor wire has a substantially constant radius) and therefore follows a substantially circular path. A suitable example excitation coil 330 having a conductor wire extending in a circular path around the axis D in a single direction is illustrated in isolation in Figure 20(a) and 20(b).

In the embodiment described, the excitation coil 330 is a single-turn (or "single loop") excitation coil. Accordingly, it is wound (extends/turns) circularly around the axis D only once, rather than multiple (e.g. overlapping) times. In the embodiment described, the single-turn/loop excitation coil comprises two single-turn (copper) conductor wires 330a, 330b that extend circularly/annularly about the axis D once, which have the same radius "r" as each other and which are arranged in parallel on adjacent layers of the member 302 (and therefore are spaced apart along a direction parallel to the axis D as illustrated in Figure 20(a)), their respective ends being joined to a single pair of terminals (+/-). Accordingly, as configured, the two conductor wires 330a, 330b form a single direction, single-turn, circularly/annularly-extending excitation coil that extends around the axis D once, and which is concentric with the first 304, second 306 and third 308 receiver coils. The benefit of using two conductor wires configured as described is that the resistance of the excitation coil 330 is reduced compared to an equivalent excitation coil that only has one conductor wire (of the same dimensions), which increases the quality (Q factor) of the excitation coil. As will be understood, in an equivalent embodiment, a similar reduction in the resistance of the excitation coil could be achieved with one conductor wire, by using a thicker conductor wire and/or a wire made from a material having reduced inherent resistance.

As will be understood, in other embodiments, the excitation coil 330 could comprise multiple-turns or "loops", in which case the excitation coil's conductor wire winds around the axis D more than once, e.g. adopting a helical form having a substantially constant radius. However, it can be preferred that the excitation coil is just a single turn or "loop" excitation coil, in order to minimise the inductance of the excitation coil, thereby relatively reducing the required drive voltage to achieve the desired magnetic field. However, as will be understood, for a given desired magnetic field to be created by an excitation coil, lowering the number of turns the excitation coil has, means that the level of current/amps required through the excitation coil needs to be increased. Whilst this could be achieved by providing a power supply/drive circuitry which directly provides the required level of current/amps to be passed through the excitation coil 330, the current (amp) requirement of the power supply/drive circuitry could be reduced by configuring the excitation coil to operate as a "resonant circuit" (also known as an "LC circuit", "tank circuit" or "tuned circuit"), e.g. such that it stores energy that oscillates at the same frequency as the oscillating power supply /drive circuitry. In such a case the power supply/drive circuitry merely needs to supply sufficient current to overcome the losses in the excitation coil 330. An effective way of configuring the excitation coil 330 to operate as a resonant circuit is to configure the excitation coil 330 with a suitable capacitor 331 (which in such a circumstance can be referred to as a "resonant capacitor"), e.g. as schematically illustrated in Figures 20(a) and (b). In the embodiment described, the operating/drive frequency of alternating magnetic field/the stator's excitation coil is approximately 3 MHz, and so the capacitor is selected accordingly, based on the inductance of the excitation coil's circularly-extending conductor wires.

In the particular embodiment described, due to space constraints, the ("resonant") capacitor 331 is provided on a different layer of the stator member 302 to that of the conductor wire(s) 330a, 330b of the excitation coil 330 (and therefore is illustrated in Figure 20(a) as being at a different position to the conductor wires 330a, 330b along a direction parallel to the axis D). However, in the embodiment described, the capacitor 331 is advantageously physically located to lie on substantially the same radius as that of the conductor wires 330a, 330b. This can be advantageous because the capacitor 331 contributes to the electromagnetic field produced by the excitation coil 330, and therefore placing it on substantially the same radius as that of the conductor wires 330a, 330b of the excitation coil helps to reduce a distortion in the electromagnetic field produced by the excitation coil 330 in the region of the capacitor 331.

As will be understood, the use of a resonant capacitor is not limited to just the single turn, single direction embodiment described and shown in connection with Figures 20(a) and (b), but can be useful in other configurations of excitation coil too. For example, a resonant capacitor could be used in embodiments in which the coil comprises multiple turns, and also (as described in connection with Figure 20(d) below) can be used in embodiments in which the excitation coil extends/winds around the axis in both clockwise and anti-clockwise directions.

In the embodiment described, there is just one single excitation coil 330 which is shared between the three receiver coils (i.e. the one excitation coil 330 is used to generate the electromagnetic field for the three receiver coils). As will be understood, other excitation coil configurations are possible. For instance, more than one excitation coil could be provided; in such a case, ideally they would all be in resonance. As another example, the/each excitation coil could comprise a multiple-turn (or "multiple-loop") coil. In another example, the/each excitation coil could comprise a "folded-rectangular loop". Nevertheless, the invention of the present application has been found to be particularly useful when the excitation coil comprises a single direction excitation coil due to the particular magnetic flux density profile it creates (as explained in more detail below).

Referring now to Figure 17, the effect the outer 310 and inner 312 conductive loops have on the electromagnetic field produced by the excitation coil 330 will now be explained. In summary, the outer 310 and inner 312 conductive loops have the effect of "folding back" the electromagnetic field produced by the excitation coil 330 into the region in which the receiver coils are located so as to increase the magnetic flux density in the radial space between them, thereby helping to increase the magnetic field strength in-between the two coils.

In accordance with the above description, the excitation coil 330 is on the stator (not shown in Figure 17) and has an alternating current flowing in it, thereby generating an electromagnetic field in its vicinity. The arrow on the excitation coil 330 illustrates the direction of current flow through the excitation coil 330 at a particular instant in time (which in Figure 17 is shown in a clockwise direction). From the right-hand grip rule of electromagnetism, the excitation coil 330 produces a magnetic field with a ⊗ polarity inside the loop (into the page) and a • polarity outside the loop (out of the page). For ease of illustration, Figure 17 only shows the polarity for a single half-cycle of the alternating current/electromagnetic field.

Also in accordance with the above description, the outer 310 and inner 312 conductive loops are provided on the stator 300 and are respectively situated radially outside and radially inside the stator's receiver coils (also not shown in Figure 17). Both the outer 310 and inner 312 conductive loops see a net magnetic flux of polarity ⊗ passing through them. By Lenz's Law, they both induce a current flow to oppose the magnetic field that created it (i.e. at the particular instant in time illustrated in Figure 17 is in an anti-clockwise direction as illustrated by the arrows on the outer 310 and inner 312 conductive loops). As result both the outer 310 and inner 312 conductive loops produce a • polarity inside their loop and a ⊗ polarity outside their loop. Accordingly, within the shaded areas 800, 802 of Figure 17 the magnetic flux from the outer 310 and inner 312 conductive loops oppose the magnetic flux from the excitation coil 330, reducing the magnetic flux density but, in contrast, within the non-shaded area 804 of Figure 17 (which is the area in which the scale tracks of the rotor and receiver coils of the stator are located) the magnetic flux from the outer 310 and inner 312 conductive loops are in phase with the excitation coil 330 and hence will act to increase the magnetic flux density in that area.

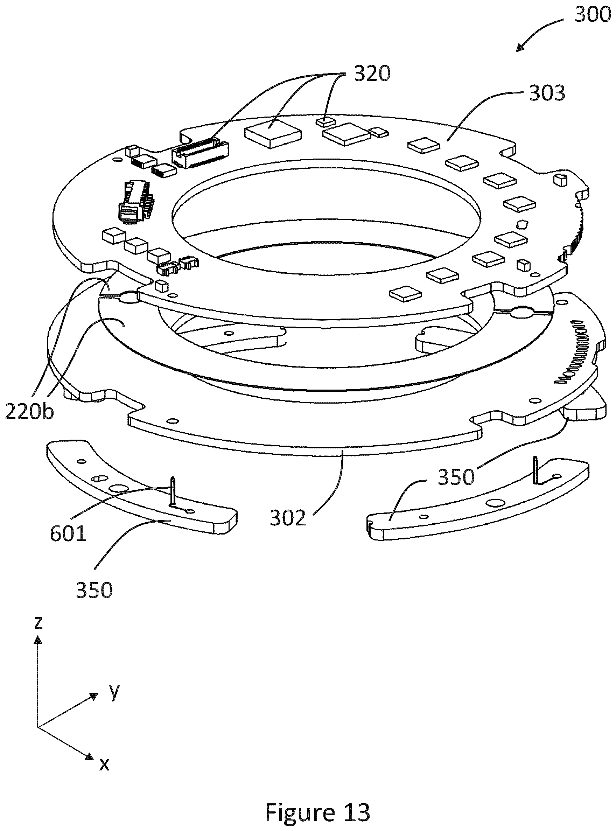

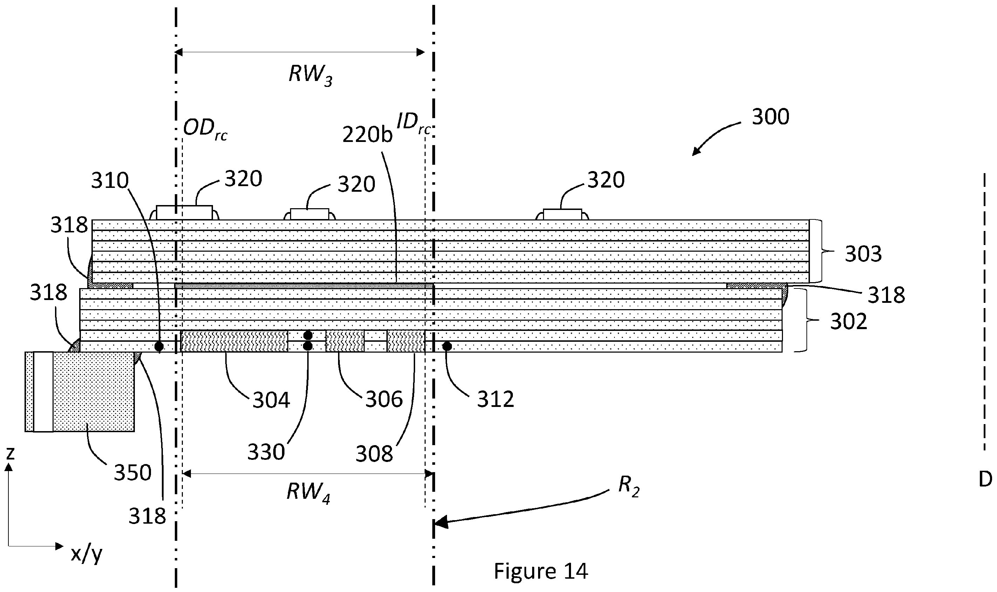

As illustrated in Figures 13 and 14 (and 16), magnetically permeable material 220b is located between the first planar stator member 302 and the second planar stator member 303. In particular, the magnetically permeable material 220b of the stator is arranged so as be directly behind the first planar stator member 302 (i.e. on the side of the first planar stator member 302 that is distal (or "faces away from") the rotor 200 when in use). In particular, as illustrated in Figures 14 (and 16), in the embodiment described, the magnetically permeable material 220a is arranged so as to lie directly behind the stator's excitation 330 and receiver 304, 306, 308 coils. As illustrated in Figure 14, in the embodiment described, the (outer and inner) radial bounds of the magnetically permeable material 220b define a notional radial region *R₂* (identified by the dash-and-double-dot lines and having a radial with *RW₄*) the sides of which extend parallel to the axis D, within/between which the stator's excitation 330 and receiver 304, 306, 308 are radially positioned.

In the embodiment described, the magnetically permeable material 220b of the stator 300 is identical in form and composition to the magnetically permeable material 220a of the rotor 200 (i.e. it comprises two semi-circular strips of a material comprising a polymer base and comprises micron-sized magnetic powders dispersed throughout the polymer base, is approximately 0.2 mm thick, has a relative magnetic permeability of 60, is non-electrically-conductive). As will be understood they don't need to be identical, but this can be simpler from a manufacturing point of view. Either way, the reason for using magnetically permeable material 220b between the first planar stator member 302 and the second planar stator member 303 is the same as that for the rotor; i.e. the magnetically permeable material 220b is arranged so as to increase the relative magnetic permeability *µr* in the vicinity of the excitation coil 330 which in turn leads to an increase in the magnetic flux density of the electromagnetic field created thereby. This in turn will increase the component of the magnetic flux density that passes perpendicularly into the scale tracks 204, 206, 208, thereby increasing the eddy currents generated therein which in turn provides a greater amplitude modulating effect on the electromagnetic fields sensed by the receiver coils (compared to if the magnetically permeable material 220b was not present) . In the embodiment described, outer 310 and inner 312 conductive loops are provided and positioned such that the magnetically permeable material 220b increases the magnetic permeability not just for the electromagnetic field created by the excitation coil 330, but also for the electromagnetic fields created by the outer 310 and inner 312 conductive loops, and therefore also increases the magnetic flux density of the electromagnetic fields created by the outer 310 and inner 312 conductive loops.

The magnetically permeable material 220b between the first planar stator member 302 and the second planar stator member 303 also has the additional benefit of shorting any electromagnetic fields generated by the electronic components 320 so as to substantially prevent them from interfering with the electromagnetic field generated by the excitation coil 330 in the vicinity of the excitation 330 and receiver 304, 306, 308 coils.

As per the magnetically permeable material of the rotor, in the embodiment described the magnetically permeable material 220b of the stator does not extend along 100% of the length of the excitation and receiver coils, but rather only about 95% of their length (which in this embodiment, is their circular extent). Accordingly, the magnetically permeable material 220b does not subsist within/cover 100% of the footprint of the excitation and receiver coils (i.e. the area between the innermost and outermost diameters defined by the excitation and receiver coils), due to the gap between the ends of the two semi-circular strips 220b of magnetically permeable material. Nevertheless, in this embodiment the magnetically permeable material 220b does still subsist within/cover at least 95% of the footprint of the excitation and receiver coils.

As illustrated in Figure 14, in the embodiment described, the radial width *RW₃* and radial position of the magnetically permeable material 220b is substantially matched with the radial width *RW₄* and position of the inner-most *ID_{rc}* and outer-most *OD_{rc}* radial bounds defined by the receiver coils 304, 306, 308, such that it extends over at least the entire width of the excitation and receiver coils provided on the state. In particular, in the embodiment described, *RW₃* is actually slightly radially wider *RW₃* such that the magnetically permeable material 220b extends just beyond both the inner-most *ID_{rc}* and outer-most *OD_{rc}* diameters of the receiver coils 304, 306, 308. However, as will be understood, this need not necessarily be the case, and *RW₃* could be exactly the same as or narrower than *RW₄.* Additionally/alternatively, the radial location of the magnetically permeable material 220b could be partially radially offset with respect to the receiver coils 204, 306, 308. As explained above, the point of the magnetically permeable material 220b is such that it increases relative magnetic permeability *µr* in the vicinity of the excitation coil 330 which in turn increases the magnetic flux/magnetic flux density of the magnetic field created by the excitation coil 330 (within the vicinity of the scale tracks 204, 206, 308 and receiver coils 304, 306, 308, compared to if the magnetically permeable material 220b was not present), and so as will be understood, there are various ways in which the magnetically permeable material 220b could be configured and located, with varying degrees of beneficial effect. As will also be understood, the magnetically permeable material 220a could be partially offset in the radial dimension with respect to the receiver coil(s) 304, 306, 308 (e.g. such that it does not extend behind the entire radial width of the receiver coils of interest, but extends only partially behind the receiver coil(s) and extends beyond either the inner or outer bound of the receiver coil).

As illustrated in Figure 16, when assembled, the bounds of the rotor's and stator's magnetically permeable material 220a/b between them define a notional area A*₁* (identified by the dash-and-double-dot box) within which the excitation 330 and receiver 304, 306, 308 coils, and the first 204, second 206 and third 208 scale tracks reside. As will be understood, one or both of the rotor's and stator's magnetically permeable material 220a/b could be radially narrower (or wider) than the other, and could be such that one or more of the excitation 330 and receiver 304, 306, 308 coils, and the first 204, second 206 and third 208 scale tracks do not (e.g. fully) reside within the notional area A# defined by the bounds of the rotor's and stator's magnetically permeable material 220a/b, but the configuration of Figure 16 wherein all of the excitation 330 and receiver 304, 306, 308 coils, and the first 204, second 206 and third 208 scale tracks fully reside within notional area *A₁* can be preferred. In accordance with the invention, it is possible that only one of the rotor and stator comprises the magnetically permeable material 220a/b. In which case, a notional area A# can still be identified by the radial bounds of the magnetically permeable material 220a/b (i.e. the area A# will extend to infinity in the axial dimension / have no upper or lower boundary in the orientation shown in Figure 16, as per Figures 6 and 14).

As described above in connection with the magnetically permeable material 220a of the rotor 200, the magnetically permeable material 220b of the stator 300 could take a different form to that described and depicted above in connection with Figures 13 to 16. For instance, the magnetically permeable material 220b of the stator 300 could comprise: a continuous circular ring of material (e.g. as per Figure 9); a series of compactly arranged radially-extending strips; a plurality of separate (e.g. concentric) rings of magnetically permeable material 220a radially spaced from each other, or radially abutting. Also, as per the magnetically permeable material 220a of the rotor 200, the magnetically permeable material 220b of the stator 300 are formed from a sheet material having magnetic particles dispersed therethrough. The sheet material could be a ferrite sheet for example. In the embodiment described, each of the semi-circular strips of magnetically permeable material 220b comprise a sheet having a polymer base and comprising micron-sized magnetic powders dispersed throughout the material. In an alternative embodiment, a magnetic paste could be used instead of or as well as the described sheets.

In use/during operation, a power supply/drive circuitry drives an alternating current through the excitation coil 330 which thereby generates an alternating electromagnetic field which extends across the radial extent of the encoder 100.

Due to the configuration of the excitation coil 330 in the present embodiment extending around the axis D in a single direction only (i.e. it does not fold back on itself as is the case, for instance, in a "folded rectangular loop"), the current flows around the axis D in one direction only at any given instant in time. For example, as schematically illustrated by the arrows on the conductor wires 330a, 330b in Figure 20(a), at a first instant in time current flows through the conductor wires 330a, 330b in a clockwise direction only around the D axis. As will be understood, the direction of the arrows will point in the opposite at a different instant in time when the current is flowing through the conductor wires 330a, 330b in the opposite direction, due to the alternating current.

The profile (schematically illustrated in Figure 20(c)) of the magnitude of the component of the magnetic flux density that passes perpendicularly through the scale (i.e. parallel to the axis D) created by the single direction excitation coil 330 is to be contrasted with the profile of the magnitude of the component of the magnetic flux density that passes perpendicularly into the scale (i.e. parallel to the axis D) as created directly by an excitation coil 430 configured as a folded rectangular loop (schematically illustrated in Figure 20(d)), wherein at any particular instant in time current flows in both clockwise and anti-clockwise directions around the D axis (illustrated by the arrows on the conductor wire 430a). As schematically illustrated in Figure 20(e), in such a configuration, the magnitude of the component of the magnetic flux density that passes perpendicular into the scale (i.e. parallel to the axis D) is significantly greater and more uniform inside the folded rectangular loop compared to outside it. In such a configuration, as schematically illustrated in Figures 20(d) and 20(e), the first receiver coil 304 can be located inside the folded rectangle loop, and the second 306 and third 308 receiver coils can be positioned on opposing radial sides of the folded rectangular loop. As will be understood, in this case, the radial position of the first 204, second 206 and third 308 scale tracks on the rotor will need to be changed/re-ordered accordingly. As schematically illustrated in Figure 20(d), the folded rectangular loop excitation coil 430 can optionally also comprise a resonant capacitor 431 if desired, and as schematically illustrated in Figure 20(d), it can be arranged to lie so as to be radially-in-line with the excitation coil's conductor wire 430a (so as to minimise disturbances to the magnetic field produced thereby, although this is less important with a folded rectangular loop design due to the magnetic field not being uniform in the region of the folds/back-turns).

As mentioned above, the magnetically permeable material 220a/b of the rotor 200 and stator 300 boosts the magnetic flux density in the vicinity of the scale 201 and excitation 300 and receiver coils 304, 306, 308. This in turn increases the magnetic flux density passing perpendicularly into the scale features, and this is schematically illustrated in Figures 20(c) and 20(e) by way of the solid and dashed lines which schematically illustrate the magnitude of the component of the magnetic flux density passing perpendicularly into the scale for equivalent systems both with and without the magnetically permeable material 220a/b of the rotor 200 and stator 300. That is, in Figures 20(c) and 20(e) the solid lines schematically represent a representative profile of the magnitude of the component of the magnetic flux density passing perpendicularly into the scale in a system without the above-described magnetically permeable material 220a/b of the rotor 200 and stator 300, and the dashed lines schematically represent a representative profile of the magnitude of the component of the magnetic flux density perpendicular to the scale in a system which is identical in all aspects excepted that it does have the above-described magnetically permeable material 220a/b of the rotor 200 and stator 300.

Furthermore, as mentioned above, the outer/inner conductive loops boost the magnetic flux density, and this is also schematically illustrated in Figures 20(c) and 20(e) by way of the dot-and-dash line which schematically illustrates the boosting effect of providing the outer and inner conductive loops as well as the magnetically permeable material 220a/b of the rotor 200 and stator 300. As will be understood, increasing the magnetic flux density passing perpendicularly into the scale features thereby increases the eddy currents generated therein which in turn provides a greater amplitude modulating effect on the electromagnetic fields sensed by the receiver coils.

Regardless of the particular configuration of the excitation coil 330, and regardless of the presence or absence of outer and/or inner conductive loops, the first 304, second 306, and third 308 scale receiver coils are arranged to sense the electromagnetic field and provide outputs in response thereto. The electromagnetic field created by the excitation coil 330 is affected by (i.e. the electromagnetic field is changed by) the presence of the scale features of the first 204, second 206 and third 208 scale tracks on the rotor 200 (which in this embodiment is due to eddy currents created within the scale features). Therefore the scale features have an amplitude-modulating effect on electromagnetic field created by the excitation coil 330. Furthermore, the effect on the electromagnetic field as sensed by the first 304, second 306 and third 308 receiver coils, changes as the rotor 200 and stator 300 rotate relative to each other about the B/D axis. This phenomenon is used to determine the relative rotational position of the rotor 200 and stator 300 about the axes B/D (and therefore the relative rotational position of the shaft 500 and static part 600 of the machine about the axis of rotation A).

In the embodiment described, the scale features of the first 204, second 206 and third 208 scale tracks modulate the amplitude of the alternating electromagnetic field as sensed by the first 304, second 306 and third 308 receiver coils. In particular, due to the above-described differing scale periods and phase relationships of the first 204, second 206 and third 208 scale tracks, the effect they each have on the amplitude of the alternating electromagnetic field (as sensed by the SIN and COS differential coils of their respective first 304, second 306, and a third 308 scale receiver coils), differs from each other, and in essence the rotor creates multiple (in this embodiment, three), radially-localised, differently amplitude modulated, electromagnetic fields.

In particular, the scale features of the first 204, second 206 and third 208 scale tracks on the rotor 200 impart cyclical variations in the amplitude of the alternating electromagnetic field at different spatial frequencies (dependent on the relative rotational position of the rotor and stator about the axes A/B/D - which in use are all coaxial). The spatial frequency of the cyclical variation in the amplitude of the electromagnetic field caused by the first scale track and as sensed by the first scale receiver coil 304, the spatial frequency of the cyclical variation in the amplitude of the electromagnetic field caused by the second scale track and as sensed by the second scale receiver coil 306, and the spatial frequency of the cyclical variation in the amplitude of the electromagnetic field caused by the third scale track and as sensed by the third scale receiver coil 308, are all different to each other.

Furthermore, due to the differences in the periods of the scale tracks being arranged such that the phase relationship between the scale features of the three scale tracks at any angle about the axis B is mutually exclusive compared to any other angle of rotation, the combination of the phase values of the amplitude modulated electromagnetic fields will be unique for each angle of relative rotation of the rotor 200 and stator 300 about the axis of rotation A, and this phenomenon enables an absolute position of the rotor 200 and stator 300 about the axis of rotation to be established. For instance, as explained in more detail below, due to this phenomenon, there will be a corresponding cyclical variation in the amplitudes of the alternating currents output by the first 304, second 306, and a third 308 scale receiver coils, from which the absolute position of the rotor 200 and stator 300 can be derived.

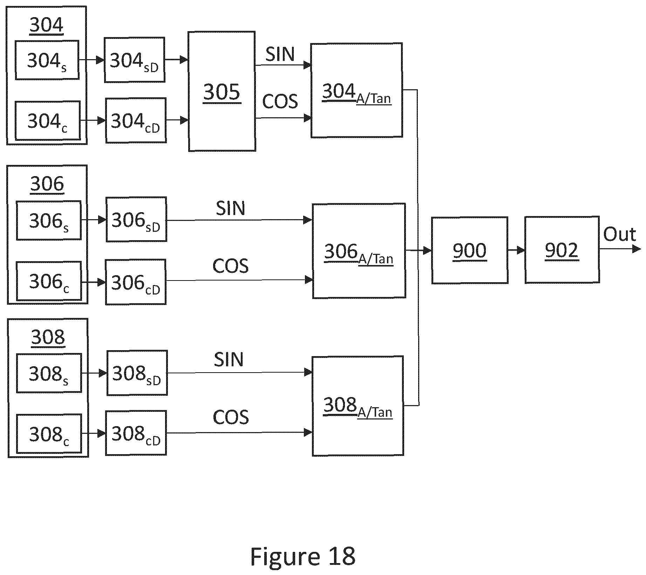

Figure 18 is a block diagram of an example system for determining the relative rotational position of the rotor 200 and stator 300 about the axes B/D using the outputs of the differential SIN and COS coils of the first 304, second 306 and third 308 scale receiver coils. As explained, each of the first 304, second 306 and third 308 scale receiver coils comprise overlapping differential SIN and COS. This is schematically illustrated in Figure 18, wherein a first one of the coils in a pair is labelled with a "s" suffix and the other of the coils in a pair is labelled with a "c" suffix. Accordingly, Figure 18 schematically illustrates that the first receiver coil 304 comprises a (differential) SIN coil 304, and a (differential) COS coil 304_{c}, the second receiver coil 306 comprises a (differential) SIN coil 306, and a (differential) COS coil 306_{c}, and the third receiver coil 308 comprises a (differential) SIN coil 308, and a (differential) COS coil 308_{c}.

As mentioned above, the presence of the respective scale track features causes the amplitude of the electromagnetic field generated by the excitation coil to be modulated depending on the relative rotational position of the stator and rotor. Accordingly, the signals sensed by, and the alternating voltage/signals output by, the (differential) SIN and COS coils are amplitude modulated, and are subsequently demodulated in order to derive relative rotational position information therefrom. Accordingly, in the embodiment described, and as schematically depicted in Figure 18, each (differential) SIN and COS coil has its own respective demodulator (304_{sD}, 304_{cD}, 304_{sD}, 306_{cD}, 308_{sD}, 308_{cD}) for demodulating the signal therefrom. The demodulators demodulate the signals output by their respective differential SIN and COS coils, to obtain respective demodulated/baseband signals, labelled in Figure 18 as "SIN" and "COS" signals.

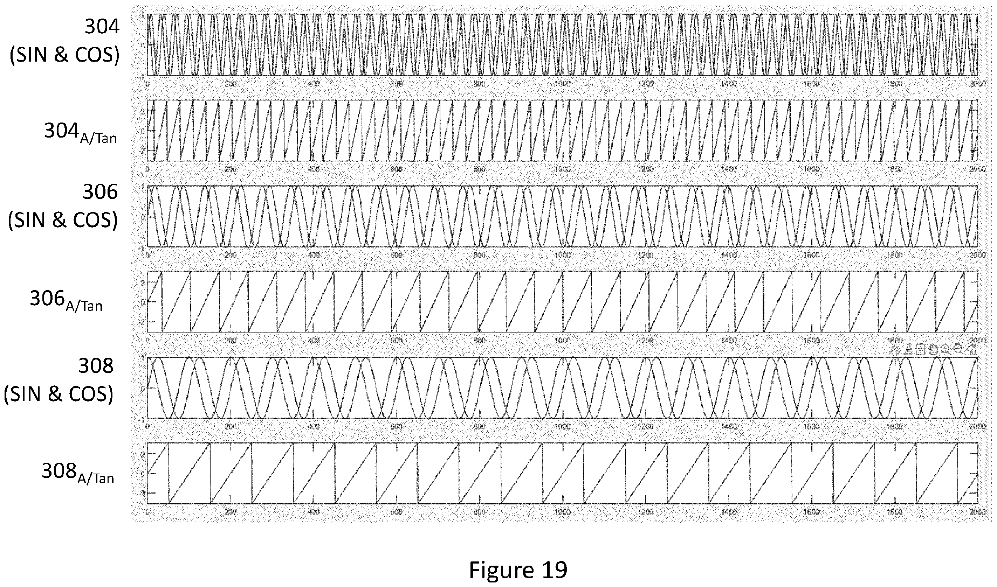

As illustrated, the corresponding (demodulated/baseband) SIN and COS signals of each of the first 304, second 306 and third 308 scale receiver coil (as output by their corresponding demodulator) are provided to a corresponding Arc Tangent Calculator (i.e. a first Arc Tangent Calculator 304_{A/Tan}, a second Arc Tangent Calculator 306_{A/Tan}, and a third Arc Tangent Calculator 308_{A/Tan}) which calculates an angle from the pair of SIN and COS signals. Figure 19 illustrates how the angles calculated by each of the first 304_{A/Tan} , second 306_{A/Tan}, and third 308_{A/Tan} Arc Tangent Calculators vary with relative rotation of the stator and rotor about the axes B/D.

As mentioned above, the periods of the first 204, second 206 and third 208 scale tracks are different. In particular, the first 204, second 206 and third 208 scale tracks and the first 304, second 306 and third 308 receiver coils are configured such that for each angle of rotation of the rotor and stator about the axes B/D the signal phase values of the at least three separate signal channels have a unique combination. This enables an absolute rotational position to be determined from the outputs of the three Arc Tangent Calculators.

As will be understood, each of the scale tracks and associated scale receiver coils and electronics (e.g. the Arc Tangent Calculators) form a "signal channel". In this embodiment: the first scale track 204, first receiver coil 304 and first Arc Tangent Calculator 304_{A/Tan}, form a first signal channel; the second scale track 206, second receiver coil 306 and second Arc Tangent Calculator 306_{A/Tan}, form a second signal channel; and the third scale track 208, third receiver coil 308 and third Arc Tangent Calculator 304_{A/Tan}, form a third signal channel.

In this embodiment, the first scale track 204 has the highest number of integer periods per revolution, and could be referred to as the "Incremental Track" (and hence the channel associated therewith could be referred to as the "Incremental Channel"). The second 206 and third 208 scale tracks signal channels have a lower number of periods per revolution compared to the first scale track 204. The second and third scale tracks (and hence the signal channels associated therewith) could be referred to as (first and second) "Vernier Tracks" (and hence the second and third signal channels associated therewith could be referred to as "Vernier Channels"). In the embodiment described the first 204, second 206 and third 208 scale tracks are configured such that such that the only common integer factor of the period count of all of the scale tracks is 1. As will be understood, other terms used in the art of inductive encoders for "period count" include "feature count" and "line count".

Compared to a two-channel system, a three-channel system provides significantly greater freedom in the choice of the number of periods of each channel and provides a greater error tolerance in the calculation of the channel phase. This error tolerance allows a high number of incremental periods per revolution to be used and hence large diameter encoders are possible. Nevertheless, the present invention is applicable to systems with just two or even just one channel.

The relatively large error tolerance on the phase detection allows small signal amplitudes to be used for the Vernier Channels with a lower signal to noise ratio. Indeed, it has been found that with a three-channel system limited or no filtering and automatic/dynamic signal correction need be applied to the Vernier Channels, thereby simplifying the design of and reducing the cost of the inductive rotary encoder system. Therefore, as shown in Figure 18, in the embodiment described, only SIN and COS signals from the first receiver coil 304 pass through an automatic/dynamic signal corrector 305, which in this embodiment performs automatic/dynamic gain correction (AGC), automatic/dynamic offset correction (AOC), automatic/dynamic balance correction (ABC), and automatic/dynamic phase correction (APC), on the output from the first receiver coils 304, before being passed to its corresponding Arc Tangent Calculator 304_{A/Tan}.

The output from each of the first 304_{A/Tan}, second 306_{A/Tan}, and third 308_{A/Tan} Arc Tangent Calculators is passed to a position calculator 900 which calculates therefrom the absolute position of the stator and rotor about the axis of rotation. For instance, this could be done via a function or look-up table based on the values of each channel/outputs from the three Arc Tangent Calculators. However, in the embodiment described, the absolute position is calculated by a loop which increments through every possible incremental period and compares the actual Vernier phases to the expected Vernier phases for that period. Once the loop has been completed, there should only be one position detected. The use of an iterative loop for determining the position is particularly preferred over the use of other techniques, such as those that use a look up table. For instance, an iterative loop can be more efficient, especially from a memory point of view, and also more versatile (e.g. if the process is to be used across different sized inductive rotary encoders).

For example, the position calculator 900 can be configured to take the value output by the first Arc Tangent Calculator 304_{A/Tan}, and then, for each of the scale periods of the first scale track/incremental channel (in the embodiment described for each of the sixty-four scale periods), identify what value you would expect to see from the second 306_{A/Tan} and third 308_{A/Tan} Arc Tangent Calculators. The position calculator 900 then compares the expected values with the actual values output by the second 306_{A/Tan} and third 308_{A/Tan} Arc Tangent Calculators, and checks if they match. Whether or not they match is recorded. As mentioned above, this is repeated for each of the scale periods of the first scale track/incremental channel (in the embodiment described for each of the sixty-four scale periods). There should be only one match, and if so then that matched position is provided to the output unit 902. If there are no matches, or more than one match, an error state is reported to the output unit 902. Output unit 902 can be any suitable unit for outputting/communicating the position information/error state to an external device, e.g. such as a position controller, including via a wired or wireless connection.

As will be understood, the Arc Tangent Calculators 304_{A/Tan}, 306_{A/Tan}, 308_{A/Tan} and the position calculator 900 can comprise any suitable processing device, including, but not limited to bespoke processing devices configured for the specific application (e.g. a field programmable gate array "FPGA") as well as a more generic processing devices which can be programmed (e.g. via software) in accordance with the needs of the application in which it is used. Accordingly, suitable processing devices include, for example, a microprocessor, CPU (Central Processor Unit), FPGA (Field Programmable Gate Array), or ASIC (Application Specific Integrated Circuit), or the like.

The above-described embodiments relate to a rotary inductive encoder system, but as will be understood the same invention and related principles described herein are also applicable to linear inductive encoder systems too.

## Claims

1. An inductive encoder comprising first and second members relatively moveable along a measurement direction, configured such that:
• the first member has, arranged at or toward a front side thereof which faces the second member, at least a first scale track,
• the second member has, arranged at or toward a front side thereof which faces the first member:
∘ an excitation coil through which an alternating current is passed at a predetermined operating frequency so as to generate an alternating magnetic field which is manipulated by the first scale track; and
∘ at least a first receiver coil for sensing the alternating magnetic field as manipulated by the first scale track, via which the relative position of the first and second members along the measurement direction can be measured,
**characterised in that**:
i) the first member comprises magnetically permeable material having a relative magnetic permeability *µᵣ* of at least 2 at said operating frequency so as to increase, at least at the first scale track, the magnetic flux density of the magnetic field generated by the excitation coil; and/or
ii) the second member comprises magnetically permeable material having a relative magnetic permeability *µᵣ* of at least 2 at said operating frequency so as to increase, at least at the first scale track, the magnetic flux density of the magnetic field generated by the excitation coil.

2. An inductive encoder as claimed in claim 1, in which:
• the magnetically permeable material of the first member is arranged behind the scale track; and/or
• the magnetically permeable material of the second member is arranged behind the excitation coil and/or at least first receiver coil.

3. An inductive encoder as claimed in claim 1 or 2, in which:
• the first member comprises a layered construction, and wherein the magnetically permeable material of the first member is sandwiched between a first layer thereof which comprises the first scale track, and a second layer thereof; and/or
• the second member comprises a layered construction, and wherein the magnetically permeable material of the second member is sandwiched between a first layer thereof which comprises the excitation and receiver coils, and a second layer thereof.

4. An inductive encoder as claimed in claim 3, in which the second layer of the first member is a mounting member, comprising features via which the first member can be mounted to a machine part.

5. An inductive encoder as claimed in claim 3 or 4, in which the second layer of the first member comprises a metallic layer.

6. An inductive encoder as claimed in any of claims 3 to 5, in which the second layer of the second member comprises one or more electronic components mounted thereon.

7. An inductive encoder as claimed in any preceding claim, in which the magnetically permeable material of the first member and/or of the second member comprises a substrate having magnetic particles dispersed therethrough.

8. An inductive encoder as claimed in any preceding claim, in which the magnetically permeable material of the first member and/or of the second member has a relative magnetic permeability *µᵣ* at the operating frequency of at least 10, optionally of at least 20, for example of at least 30.

9. An inductive encoder as claimed in any preceding claim, in which:
• the position and width of the magnetically permeable material of the first member, is such that it sits directly behind and extends over at least 75% of the entire width of the at least first scale track; and/or
• the position and width of the magnetically permeable material of the second member, is such that it sits directly behind and extends over at least 75% of the entire width of the excitation and receiver coils.

10. An inductive encoder as claimed in any preceding claim, in which:
• the magnetically permeable material of the first member extends along at least 75% of the length of the at least first scale track as measured along the measurement direction; and/or
• the magnetically permeable material of the second member extends along at least 75% of the length of the excitation and receiver coils as measured along the measurement direction.

11. An inductive encoder as claimed in any preceding claim, in which the magnetically permeable material of the first member and/or of the second member increases, at least at the first scale track, the magnetic flux density of the magnetic field generated by the excitation coil, by at least 5%, optionally by at least 10%, for example by at least 20%.

12. An inductive encoder as claimed in any preceding claim, in which the inductive encoder is rotary inductive encoder, wherein:
• the first and second members are relatively rotatable about an axis of rotation and wherein the measurement direction is a rotational measurement direction;
• the at least first scale track extends annularly around a scale track axis;
• the excitation and receiver coils extend annularly around a coil axis at different radii to each other;
and wherein:
- the magnetically permeable material of the first member extends around the scale track axis along the measurement direction; and/or
- the magnetically permeable material of the second member extends around the coil axis along the measurement direction.

13. An inductive encoder as claimed in claim 12, in which the excitation coil is a single direction excitation coil such that in use current flowing through the excitation coil does so in one direction only around the coil axis at any given instant in time.

14. An inductive rotary encoder as claimed in claims 12 or 13, in which:
• the first member has second and third scale tracks extending annularly around the scale track axis at different radii to each other and to the first scale track;
• the second member comprises a second receiver coil for sensing the alternating magnetic field as manipulated by the second scale track, and a third second receiver coil for sensing the alternating magnetic field as manipulated by the third scale track, via which the relative rotational position of the first and second members about the axis of rotation can be measured, the second and third receiver coils have different radii to each other and to the excitation coil and the first receiver coil;
• the first and second receiver coils are located on the same radial side of the excitation coil as each other, wherein the first receiver coil is radially separated from the excitation coil by the second receiver coil;
• the third receiver coil is provided on the opposite radial side of the excitation coil to the first and second receiver coils.

15. An inductive rotary encoder as claimed in any preceding claim **characterised in that** at least one of the first and second members comprises a magnetic flux increaser within which a current flow is generated by the excitation coil's alternating magnetic field, and which in turn itself generates a magnetic field which acts to increase the magnetic flux density of the alternating magnetic field.

16. An apparatus as claimed in any preceding claim, in which the scale track(s) is(are) configured to manipulate the amplitude of the magnetic field dependent on the relative position of the first and second members along the measurement direction.
